# EUROPÄISCHE PATENTSCHRIFT

(11) **EP 2 669 070 B1**
(45) Veröffentlichungstag und Bekanntmachung des Hinweises auf die Patenterteilung: **21.06.2017**
(21) Anmeldenummer: 13002470.6
(22) Anmeldetag: 10.05.2013
(51) Int. Cl.: B29C 49/42, B29C 49/78, B29C 49/12

(54) **Hohlkörperherstellungsmaschinen und Blasverfahren zum Umformen eines Materials**
Machines for making hollow articles and method of blow moulding a material
Machines de fabrication de corps creux et méthode de soufflage d'un matériau

(30) Priorität: 02.06.2012 DE 102012010985
(43) Veröffentlichungstag der Anmeldung: 04.12.2013
(73) Patentinhaber: Krones AG, 93073 Neutraubling (DE)
(72) Erfinder: Winzinger, Frank, 93073 Neutraubling (DE)

(56) Entgegenhaltungen:
- WO-A1-2006/108382
- WO-A2-2006/108380
- WO-A2-2009/010024

## Beschreibung

Die vorliegende Erfindung betrifft eine Hohlkörperherstellungsmaschine zur Herstellung von Hohlkörpern gemäß den Merkmalen der Oberbegriffe der Ansprüche 1, 20,26.

### Stand der Technik

Hohlkörperherstellungsmaschinen sind aus dem Stand der Technik allgemein bekannt. Beispielsweise gibt es Blasmaschinen zur Herstellung von Kunststoffbehältnissen, z.B. PET-Flaschen, bei welchen eine Vielzahl von Blasstationen auf einem rundlaufenden Transportrad angeordnet sind und bei welchen erwärmte Vorformlinge kontinuierlich in die Blasstationen eingegeben werden, um diese - nach dem Schließen der Blasform und dem Abdichten - gegen die Innenwände der Blasform mittels Druckluft zu expandieren. Hierbei kann grundsätzlich nochmals unterschieden werden, ob es sich um einen sog. Einstufenprozess handelt, bei dem eine Blasmaschine derart mit einer Vorformlingsherstellungsmaschine (z.B. durch einen Spritzguss-, Compression-Molding- oder Extrusionsprozess) verbunden ist, sodass die Vorformlinge ohne eine weitere Abkühlung direkt nach ihrer Formgebung in einer Blasmaschine weiterverarbeitet werden können oder ob es sich um einen sog. Zweistufenprozess handelt, bei dem die Vorformlinge nach ihrem Herstellungsverfahren zunächst zwischengelagert werden und somit in kaltem Zustand vorliegen und in einem weiteren davon getrennten Prozessschritt zunächst vor dem eigentlichen Blasprozess durch eine Heizeinrichtung erwärmt werden. Ebenfalls sind stationäre Blasmaschinen zur Herstellung von Kunststoffbehältnissen aus dem Stand der Technik bekannt, welche im Taktbetrieb arbeiten.

Zur Bereitstellung von Druckluft befindet sich üblicherweise auf jeder Blasstation eine Ventileinheit, die die Zuleitung und auch (meistens) die Ableitung von Blasluft zu und aus den Hohlkörpern mittels Ventilen steuert.

Ebenfalls ist es bekannt, besagte Vorformlinge zunächst mit einem ersten Druck und zumindest zeitweise gleichzeitigem Recken mittels einer Reckstange vorzublasen und die Vorformlinge anschließend mit einem zweiten Druck, der größer ist als der erste Druck, fertigzublasen, wobei hierzu meistens zwei Druckluftspeicher, für den ersten und den zweiten Druck, vorhanden sind und zwei den jeweiligen Druckluftspeichern zugeordnete Ventile zum Freigeben der Leitung vom Druckluftspeicher in den zu formenden Vorformling angebracht sind. Üblicherweise ist auch ein zusätzliches Ventil zur Ableitung der Druckluft in einen Schalldämpfer vorgesehen.

Die drei Ventile sind üblicherweise in der Ventileinheit derart angeordnet, dass sie alle an einen gemeinsamen Hohlraum angrenzen, welcher mit dem Hohlkörper verbunden ist, dem sogenannten Totraumvolumen. Mit dieser Anordnung muss sowohl beim Vorblasen mit geringem Druck als auch beim Fertigblasen mit hohem Druck immer der gemeinsame Totraum mit "nicht genutzter" Druckluft befüllt werden. Da die Ventile durch den für sich selbst benötigten Platz auseinander gelegt werden müssen, ist der Totraum derzeit relativ groß. Aufgrund dieser Größe des Totraums ist somit auch der Luftverbrauch hoch. Eine derartige Anordnung der Ventile (mit einem zusätzlichen Recyclingventil) ist aus der Druckschrift WO 2006/108380 A2 bekannt. Die Ventile befinden sich ständig außerhalb des Hohlkörpers. 1 Die Druckschrift WO2006/108380 offenbart eine Hohlkörperherstellungsmaschine gemäß den Oberbegriffe der Ansprüche 1 und 26. Die Druckschrift WO2006/108380 offenbart dazu ein Verfahren zum Umformen eines Materials in einen Hohlkörper mittels unter Druck stehendem Medium, umfassend folgende Schritte, insbesondere der Reihenfolge nach: a) Einbringen eines zu verformenden Materials in eine Form; b) Öffnen eines zweiten Ventils und Leiten eines unter einem zweiten Druck stehenden Mediums von einem zweiten Druckspeicher zu dem zu verformenden Material; c) Auffüllen eines zweiten Hohlraums mit dem Medium aus dem zweiten Druckspeicher, welcher sich zwischen dem zu verformenden Material und dem zweiten Ventil befindet; d) Absperren der Verbindung vom zweiten Druckspeicher zu dem zu verformenden Material durch das zweite Ventil; e) Öffnen eines ersten Ventils und Leiten eines unter einem ersten Druck stehenden Mediums von einem ersten Druckspeicher zu dem zu verformenden Material, wobei der erste Druck größer ist als der zweite; f) Auffüllen eines ersten Hohlraums mit dem Medium aus dem ersten Druckspeicher, welcher sich zwischen dem zu verformenden Material und dem ersten Ventil befindet. Aufgabe der Erfindung ist es, eine Hohlkörperherstellungsmaschine zur Verfügung zu stellen, bei welcher der Druckluftverbrauch gering ist.

Die obige Aufgabe wird durch eine Hohlkörperherstellungsmaschine und ein Verfahren gelöst, die die Merkmale in den Patentansprüchen 1, 20 und 26 umfassen. Weitere vorteilhafte Ausgestaltungen werden durch die Unteransprüche beschrieben.

### Beschreibung

Die Erfindung bezieht sich auf eine Hohlkörperherstellungsmaschine umfassend mindestens eine Form, innerhalb derer Hohlkörper mittels Beaufschlagung durch ein unter Druck stehendes Medium herstellbar sind, mindestens eine Ventileinheit, welche mit der Form derart in Wirkverbindung steht, dass das Medium zu einem sich in der Form befindenden, zu formenden Material von mindestens zwei Ventilen zu- bzw. ableitbar ist, wobei die Ventile jeweils mindestens einen Ausgang in Richtung des zu formenden Materials aufweisen und mindestens einen Eingang in Richtung eines Druckspeichers, in dem das unter Druck stehende Medium gespeichert ist, wobei der Ausgang eines ersten Ventils durch einen abdichtbaren ersten Hohlraum und der Ausgang eines zweiten Ventils über einen zweiten abdichtbaren Hohlraum mit dem zu formenden Hohlkörper verbunden ist und wobei der Eingang des ersten Ventils mit einem ersten, unter einem ersten Druck stehenden Druckspeicher verbunden ist und der Eingang des zweiten Ventils mit einem zweiten Druckspeicher verbunden ist, wobei der zweite Druckspeicher unter einem zweiten, geringeren Druck steht als der erste Druckspeicher.

Erfindungsgemäß weist dabei der erste Hohlraum in zumindest einem Betriebszustand ein geringeres Volumen auf als der zweite Hohlraum.

Um eine Definition für den Totraum zu schaffen sollen die erfindungsgemäßen Hohlräume dabei das Volumen umfassen, das durch das Medium bei einem Öffnen eines Ventils jeweils ausgefüllt wird und welches sich innerhalb der Ventileinheit bis zu einem Austritt aus der Ventileinheit in den Bereich des zu formenden Materials befindet.

Ein Hohlraum kann auch durchaus einen Teil des jeweils anderen Hohlraums bilden. Insbesondere kann der dem ersten Ventil zugeordnete Hohlraum vollständig einen Teil des dem zweiten Ventil zugeordneten Hohlraums bilden.

Insbesondere wird die Größe eines Hohlraums durch keine in den Hohlkörper einfahrbaren Mittel wie Reckstangen und dergleichen beeinflusst, sondern befindet sich im Wesentlichen, insbesondere ausschließlich, im Bereich der Ventileinheit.

Die Hohlräume stellen dabei einen Teil des Gesamtvolumens dar, welches in dieser Patentanmeldung durch die jeweiligen Hohlräume und das mit Medium auszufüllende Innenvolumen des fertigen Hohlkörpers - bzw. um eine Vergleichbarkeit zwischen einzelnen Betriebszuständen bzw. verwendeten Drücken zu schaffen - durch das Innenvolumen (sofern vorhanden) der zu formenden Masse definiert ist. Das Gesamtvolumen kann durch in den Hohlkörper einfahrbare Mittel reduziert werden.

Beim ersten Ventil handelt es sich insbesondere um ein Hochdruckventil, beim zweiten Ventil um ein Niederdruckventil. Die konstruktive Ausgestaltung kann aber bei beiden Ventilen gleich sein. Beim zweiten Ventil kann es sich auch um ein Hochdruckventil handeln.

Bei den Hohlräumen kann es sich beispielsweise um die Innenvolumina rohrartiger Körper, beispielsweise einer Blasdüse oder anderer Hülsen, handeln, aber auch um die Innenvolumina von Schläuchen.

Als Medium kann beispielsweise ein kompressibles Gas verwendet werden. Insbesondere kann Luft, gefilterte Luft, Sterilluft, entzündbare Gase wie Wasserstoff, ein Wasserdampf-Luftgemisch, Stickstoff, ein Gemisch aus Sterilisationsmittel und Luft oder dergleichen verwendet werden. Es können aber auch inkompressible Medien wie Wasser, Sterilwasser oder Produkt (Cola, Bier, Tee) zum Einsatz kommen. Ebenso sind Kombinationen aus den genannten Medien möglich. Ein Hohlkörper kann auch mit verschiedenen Medien nacheinander geformt werden. So können sich die Medien in unterschiedlichen Druckspeichern unterscheiden.

Bei der zu formenden Masse bzw. dem zu formenden Material kann es sich beispielsweise um einen bereits erwähnten reagenzglasförmigen Vorformling aus Kunststoff, insbesondere aus PET, PP oder um einen anderen Kunststoff handeln, aber auch um einen extrusionsgeblasenen Schlauch oder um einen Külbel aus Glas, wie er bei Glasblasmaschinen verwendet wird.

Unter Eingang oder Ausgang eines Ventils wird im Allgemeinen ein Durchlass bzw. eine Öffnung verstanden, durch die das Medium in eine gewünschte Richtung fließen kann. Je nach Anwendungsfall (Zeitpunkt der Ventilschaltung, Druckdifferenz zwischen den beiden Seiten) kann ein Eingang auch als Ausgang wirken und umgekehrt.

Unter abdichtbar wird verstanden, dass der Hohlraum derart über Dichtungen abgedichtet wird, dass im Wesentlichen kein Medium während des Formvorgangs ungewollt in die Atmosphäre oder vom ersten in einen Teil des zweiten Hohlraums entweicht.

Bei den zu formenden Hohlkörpern handelt es sich bevorzugt um Flaschen, jedoch sind Behältnisse jeglicher Art mit der Hohlkörperherstellungsmaschine produzierbar: Kanister, Spritzen, Tanks, Container, Bälle, Tassen, Becher und viele weitere.

Das zweite Ventil ist dabei zumindest mittelbar mit dem zu formenden Material über den zweiten Hohlraum verbunden. Das heißt, dass noch weitere pneumatische Elemente wie Ventile dazwischen geschalten werden können.

Das erste Ventil ist insbesondere unmittelbar mit dem zu formenden Material über den ersten Hohlraum verbunden.

Das Medium im ersten Druckspeicher befindet sich im Fall der Formung von PET-Flaschen im Zweistufenprozess typischerweise unter einem Druck von 5 bis 45, insbesondere von 15 bis 35 bar. Der Druck im ersten Druckspeicher ist höher als der Druck im zweiten Druckspeicher oder der Atmosphäre. Wird das eingangs erwähnte Vorblasen verwendet und dafür ein Druckspeicher bereitgestellt, so beträgt dieser Druck typischerweise zwischen 3 und 25 bar, insbesondere zwischen 5 und 20 bar. Die Druckangaben sind nicht einschränkend und können je nach zu formenden Material oder Ausprägungen des fertigen Hohlkörpers sehr stark variieren.

Der Betriebszustand (Zeitpunkt), in dem das Volumen des ersten Hohlraums kleiner ist als das des zweiten Hohlraums, ist insbesondere der, wenn Medium aus dem ersten Druckspeicher für die sich gerade in der Form befindlichen, zu formenden Masse strömt, bzw. freigegeben ist. Der Zeitraum, in dem das Volumen des ersten Hohlraums kleiner ist als das des zweiten Hohlraums, ist insbesondere der vom Zeitpunkt des Öffnens des ersten Ventils bis zum Schließen des ersten Ventils, kann aber auch anders gewählt werden, wie später in den Ausführungsbeispielen erläutert wird.

Dadurch, dass das Volumen des dem ersten Ventil zugeordneten Hohlraums niedriger und das des zweiten Ventils größer gewählt wird, ist es insbesondere möglich, das erste Ventil näher am zu formenden Hohlkörper anzuordnen. Durch diese Anordnung wird erreicht, dass das Volumen vom ersten Hohlraum möglichst klein für das Medium unter dem höheren Druck ist und dadurch in der Gesamtbilanz mehr Druckluft eingespart werden kann als bei einer Anordnung gemäß dem Stand der Technik. Dabei wird bewusst in Kauf genommen, dass das Volumen vom zweiten Hohlraum, über den ein Medium niedrigeren Drucks eingeleitet wird, größer werden kann als der Totraum bei einer Anordnung gemäß im Stand der Technik. In bestimmten Ausführungsformen der Erfindung können in Summe auch beide Hohlräume kleiner sein als der Totraum im Stand der Technik.

In anderen Worten sind unterschiedlichen Ventilen und damit auch unterschiedlichen Druckspeichern oder der Atmosphäre unterschiedliche Totraumvolumina zugeordnet.

Insbesondere ist im Bereich des zweiten Hohlraums, welcher mit dem zweiten Ventil verbunden ist, ein weiteres, den zweiten Hohlraum trennendes Ventil (im Folgenden "Verbindungsventil" genannt) vorhanden, welches während einer Druckluftzufuhr durch das erste Ventil bzw. durch den ersten Hohlraum einen Teil des zweiten Hohlraums in Richtung des zweiten Ventils absperrt bzw. abdichtet. Der zweite Hohlraum wird dann sozusagen in zumindest diesem Betriebszustand in zwei Teile getrennt. Dabei kann der erste Hohlraum in zumindest diesem Betriebszustand einen Teil des zweiten Hohlraums darstellen.

Insbesondere ist das Verbindungsventil als steuerbares Sitzventil ausgebildet. Es wäre auch möglich, dass das Verbindungsventil lediglich als einfaches, nicht aktiv steuerbares Rückschlagventil ausgebildet ist.

Die Funktion des Verbindungsventils kann auch direkt vom ersten Ventil übernommen werden, wenn dieses als Mehrwegeventil ausgebildet ist und den zu formenden Hohlkörper sowohl mit dem Druckluftspeicher höheren Drucks als auch mit dem zweiten Ventil verbinden kann. In dem Fall kann auf ein zusätzliches Verbindungsventil verzichtet werden. Alternativ zu einem Mehrwegeventil können auch andere Ventile, insbesondere ein Sitzventil mit mindestens drei, insbesondere vier Öffnungen ("Doppelsitzventil") verwendet werden.

Das erste Ventil kann insbesondere auch als einfaches Sitzventil ausgebildet sein.

Insbesondere ist auch das zweite Ventil als einfaches Sitzventil ausgebildet, es kann aber auch als Mehrwegeventil oder Mehrfachsitzventil ausgebildet sein.

Das erste Ventil und/oder das zweite Ventil können auch als Proportionalventil ausgebildet sein.

Insbesondere ist parallel zum zweiten Ventil ein Ventil angeordnet, welches mit einem Auslass für das Medium in die Atmosphäre (bevorzugt über einen Schalldämpfer) verbunden ist.

Parallel zum zweiten Ventil kann zusätzlich oder alternativ auch ein Ventil angeordnet sein, welches mit einem dritten Druckspeicher verbunden ist, welcher unter einem niedrigeren Druck steht, als der erste und insbesondere auch als der zweite Druckspeicher.

Parallel zum zweiten Ventil kann zusätzlich oder alternativ auch ein Ventil angeordnet sein, welches mit einem vierten Druckspeicher verbunden ist, welcher unter einem niedrigeren Druck steht, als der erste und insbesondere auch als der zweite und insbesondere auch als der dritte Druckspeicher.

Gemäß der Nomenklatur sollen im Folgendem alle Ventile, die an den zweiten Hohlraum angrenzen und mit einem Druckspeicher oder der Atmosphäre verbunden sind, auch als zweite Ventile bezeichnet werden. Bei den gerade genannten Ventilen kann es sich also um zweite Ventile handeln.

Das erste Ventil bzw. alle ersten Ventile (die an den ersten Hohlraum grenzen) und das Verbindungsventil bilden im Folgenden die Schaltungseinheit (alle an den ersten Hohlraum angrenzenden Ventile).

Insbesondere können vier Ventile (ein optionales Verbindungsventil nicht mitgezählt) vorhanden sein, wovon drei mit drei Druckspeichern unterschiedlichen Drucks verbunden sind und eines mit einem Auslass. Durch das Medium in einem dritten Speicher kann beispielsweise ein Vorblasen verwirklicht werden und durch das Medium in einem zweiten Speicher ein Zwischenblasen. Der Druck im "Zwischenblasspeicher" ist ebenfalls geringer als der Druck im ersten Druckspeicher. Insbesondere sind das Auslassventil und die mit dem Vorblas- und Zwischenblasspeicher verbundenen Ventile als zweite Ventile ausgebildet.

Insbesondere können auch mindestens vier Ventile (ein optionales Verbindungsventil nicht mitgezählt) vorhanden sein, wovon zwei als erste Ventile ausgebildet sind und mindestens zwei Ventile als zweite Ventile.

Insbesondere können auch mindestens fünf Ventile (ein optionales Verbindungsventil nicht mitgezählt) vorhanden sein, wovon zwei als erste Ventile ausgebildet sind und mindestens drei Ventile als zweite Ventile.

Insbesondere können auch mindestens fünf Ventile (ein optionales Verbindungsventil nicht mitgezählt) vorhanden sein, wovon eines als erstes Ventil ausgebildet ist und mindestens vier Ventile als zweite Ventile.

Insbesondere können auch mindestens sechs Ventile (ein optionales Verbindungsventil nicht mitgezählt) vorhanden sein, wovon eines als erstes Ventil ausgebildet ist und mindestens fünf Ventile als zweite Ventile.

Insbesondere können auch mindestens sechs Ventile (ein optionales Verbindungsventil nicht mitgezählt) vorhanden sein, wovon zwei als erste Ventile ausgebildet sind und mindestens vier Ventile als zweite Ventile.

Insbesondere können auch mindestens sechs Ventile (ein optionales Verbindungsventil nicht mitgezählt) vorhanden sein, wovon drei als erste Ventile ausgebildet sind und mindestens drei Ventile als zweite Ventile.

Es sind hierbei auch weitere Möglichkeiten und Kombinationen möglich, auch solche, bei denen drei Hohlräume vorhanden sind, wobei ein dritter Hohlraum ein größeres Volumen aufweist als der zweite Hohlraum. Dabei können der erste und/oder der zweite Hohlraum ebenfalls Teil des dritten Hohlraums sein. Die Anbindung des dritten Hohlraums an den Hohlkörper kann gleich gestaltet werden, wie die des zweiten. Der dritte Hohlraum könnte auch parallel zum zweiten Hohlraum angeordnet werden, wobei in diesem Fall beispielsweise zwei Verbindungsventile in der Ventileinheit vorhanden sein könnten.

Die Verwendung von Druckspeichern niedrigeren Drucks ist nicht nur zur Steuerung des Aufblasprozesses (Vorblasen) nötig, sondern kann insbesondere zusätzlich relevant zur Druckmediumwiederverwendung sein - insbesondere bei kompressiblen Medien wie Luft. Nach dem Fertigformen des Hohlkörpers unter dem höchsten Druck aus dem ersten Druckspeicher kann - nach vorhergehender Öffnung des Verbindungsventils und bevorzugt Schließen des ersten Ventils - durch Öffnung eines Ventils, welches mit einem Druckspeicher geringeren Drucks verbunden ist, das Medium von dem Hohlkörper in einen Druckspeicher geringeren Drucks zurückströmen, bevor am Ende des Blasvorgangs der verbleibende Rest des Mediums im Hohlkörper (und den Kanälen) in die Atmosphäre entlassen wird. Während der Wiedergewinnung von Druckmedium in einen Druckspeicher niedrigeren Drucks ist das erste Ventil insbesondere geschlossen, es kann aber auch geöffnet werden (bzw. eine Zeit lang offen bleiben), wenn ein Durchströmen von Medium im Hohlkörper, beispielsweise zu Kühlungszwecken, gewünscht ist.

Letztere Variante kann insbesondere dann eingesetzt werden, wenn auch zwei Strömungswege bereitgestellt werden, die an unterschiedlichen Positionen innerhalb des zu formenden Hohlkörpers münden. Bei Streckblasmaschinen kann ein Durchströmen des Hohlkörpers mit Medium mittels einer hohlen, insbesondere unten offenen, Reckstange erfolgen, durch welche das Medium zuerst zum Boden des Hohlkörpers gelangt und anschließend über einen zweiten Strömungsweg, insbesondere eine die Reckstange ringförmig umgebende Blasdüse im Bereich einer Mündung des Hohlkörpers, weiterströmt, bis zum Erreichen des Druckspeichers geringeren Drucks. Es kann auch ein Durchspülen des Hohlkörpers von einem Druckspeicher hohen oder niedrigen Drucks gegen den Auslass erfolgen, bevorzugt soll jedoch beim Spülen ein gewisser Druck im Hohlkörper vorhanden sein, weswegen bevorzugt ein Spülen von einem Druckspeicher in einen Druckspeicher niedrigeren Drucks realisiert wird. Die Varianten in diesem Absatz sind auch möglich, wenn wie oben beschrieben, nur ein zweites Ventil an einen Druckspeicher angeschlossen ist oder aber auch wenn beliebig viele zweite Ventile, also das dritte etc. an weitere Druckspeicher angeschlossen sind.

Unabhängig davon, ob ein zeitweise kontinuierliches Durchströmen von Medium im Hohlkörper realisiert wird, kann ein Recycling von dem Medium entweder einstufig oder mehrstufig stattfinden. Beim mehrstufigen Recycling wird nach dem Formen des Hohlkörpers unter dem höchsten Druck insbesondere das Ventil geöffnet, dessen zugeordneter Druckspeicher den zweithöchsten Druck aufweist, anschließend das Ventil, dessen zugeordneter Druckspeicher den dritthöchsten Druck u.s.w.. Es findet in anderen Worten ausgedrückt ein kaskadenförmiger Druckabbau im Hohlkörper statt.

Bei der Zuleitung von recyceltem Medium von den Druckspeichern beim nächsten zu formenden Hohlkörper oder einem Hohlkörper einer anderen Blasstation der Hohlkörperherstellungsmaschine (wenn die Druckspeicher von zwei Blasstationen verbunden sind), kann der Blasdruck wieder kaskadenförmig im Hohlkörper aufgebaut werden. Die Ventile werden dann im Vergleich zur Wiedergewinnung in umgekehrter Reihenfolge geöffnet. Wenn zwischen dem Vorblasen und dem Fertigblasen noch Medium aus einem weiteren Druckspeicher in den Hohlkörper geleitet wird, spricht man von dem oben genannten Zwischenblasen. Auf diese Weise wird immer ein Druckluftgefälle bereitgestellt, durch welches das Medium in den Hohlkörper strömen kann.

Insbesondere handelt es sich bei der zu formenden Masse um einen Hohlkörper mit nur einer Öffnung.

Insbesondere kann auch ein, insbesondere zweites, Ventil vorhanden sein, welches an einen reinen Wiedergewinnungsspeicher angeschlossen ist. Aus diesem kann das Medium beispielsweise anderen Druckspeichern zugeführt werden, wenn diese nicht einen nötigen Solldruck aufweisen, oder beispielsweise einer Druckluftquelle, insbesondere in eine Vorstufe eines mehrstufigen Druckluftkompressors, oder beispielsweise einer Flaschenbodennachkühlungseinheit, welche mittels Druckluftdüsen den fertigen Hohlkörper, insbesondere an dessen Boden kühlt. Ebenfalls können Antriebe der Maschine selbst oder Antriebe anderer Maschinen einer Abfüllanlage beispielsweise mit dem Druckmedium versorgt werden. Insbesondere weist der reine Wiedergewinnungsspeicher einen niedrigeren Druck im Vergleich zu allen Druckspeichern, aus denen das Medium zum Formen verwendet wird, auf. In dem Fall kann das Medium keinem anderen solchen Druckspeicher zugeführt werden.

Es können auch zwei oder mehrere erste Ventile (das Verbindungsventil hier nicht dazugezählt) vorhanden sein, wenn bei einem anderen Prozessschritt als beim Fertigblasen beispielsweise eine kurze Zykluszeit erwünscht ist. Durch die nähere Lage der ersten Ventile am Hohlkörper und dem geringeren Totraum, wirkt sich eine Öffnung eines ersten Ventils schneller auf den zu formenden Hohlkörper aus als die eines zweiten Ventils. Dies kann insbesondere auch bei einem Vorblasventil günstig sein, da der Vorblasprozess sehr viel Einfluss auf die Materialverteilung im Hohlkörper hat, ist aber auch zu bestimmten Zwecken bei anderen Ventilen möglich.

Insbesondere sind alle ersten Ventile mit Druckspeichern verbunden, die alle höhere Drücke aufweisen als die zweiten Druckspeicher, mit denen die zweiten Ventile verbunden sind.

Weiterhin können auch zwei Ventile als Auslass dienen, welche gleichzeitig offenbar sind. Eines dient zur Sicherheit, falls das andere ausfällt.

Wenn eine schnelle Entlüftung zur Senkung der Prozesszeit gewünscht ist, kann (können) ein (oder zwei) Auslassventil(e) auch als ein erstes Ventil ausgeprägt sein, bevorzugt werden Auslassventile aber als zweite Ventile eingesetzt.

Insbesondere ist das erste Ventil örtlich näher an der Form bzw. an der zu formenden Masse angeordnet als das zweite Ventil. Insbesondere sind auch alle weiteren ersten Ventile näher an der Form angeordnet als alle zweiten Ventile. Insbesondere befindet sich auch keine Schlauchleitung zwischen einem erstem Ventil und der Form.

Insbesondere ist das erste Ventil ein Sitzventil mit einem beweglichen Kolben, welcher auf einer Seite eine mit einem Ventilsitz zusammenwirkende Dichtfläche aufweist, mit welcher ein Strömen des Mediums von einem Druckspeicher in den zu formenden Hohlkörper in mindestens einem Betriebszustand unterbrochen wird und welcher eine der Dichtfläche gegenüberliegende Steuerfläche aufweist, über welche der Kolben mittels Beaufschlagung durch einen Steuerdruck bewegbar ist.

Eine weitere Reduzierung des Totraums oder des Gesamtvolumens kann dadurch erreicht werden, indem ein Ventilkolben des ersten Ventils einen Teil des durch Medium durchflossenen Hohlraums ringartig umgibt. Wenn beispielsweise eine Reckstange zum Längsdehnen der zu formenden Masse verwendet wird, kann auf diese Weise der Kolben des Ventils koaxial zur Längsachse der Reckstange angeordnet werden, weil die Reckstange durch ihn hindurch durchführbar ist. Der Kolben ist insbesondere direkt oberhalb der Mündung der zu formenden Masse angeordnet.

Eine Abdichtung der zu formenden Masse gegenüber der Umgebung wird insbesondere durch eine Blasdüse bereitgestellt, welche auf der Form selbst und/oder auf der zu formenden Masse zur Abdichtung aufsitzt. Je nach Ausführungsform schafft man mit einer Abdichtung auf der Form Platz für die Anordnung von Ventilen oder reduziert den Totraum, wenn man auf der zu formenden Masse abdichtet, wobei das erstere das zweite nicht ausschließt.

Zur weiteren Reduzierung des Totraums oder des Gesamtvolumens ist das erste Ventil, oder das erste und das Verbindungsventil, zumindest bereichsweise und zumindest zeitweise in einen Bereich positionierbar, der von der zu verformenden Masse vor einem Blasprozess umgeben wird. Eine Abdichtung über die Blasdüse findet in dem Bereich insbesondere von innen oder an dessen Kante zu einem äußeren Bereich mittels der Dichtung statt.

Dieser Vorgang kann auch erst nach einer Zuführung von Medium unter geringerem Druck stattfinden.

Das erste und/oder weitere erste Ventile und/oder das Verbindungsventil bzw. deren jeweilige Kolben können jeweils rohrförmig bzw. hülsenförmig ausgebildet sein, insbesondere kann ein Rohrabschnitt des einen Ventils einen Rohrabschnitt des anderen Ventils ringartig umgeben. Insbesondere sind mindestens zwei Ventilkolben, also die beweglichen Teile der Ventile, des ersten Ventils, des weiteren ersten Ventils und des Verbindungsventils koaxial zueinander angeordnet und befinden sich zumindest zeitweise und zumindest abschnittsweise auf der selben Höhe. Die Höhe stellt dabei den Abstand zu der zu formenden Masse dar.

Insbesondere ist eine derartige als Ventilkolben ausgestaltete Hülse lösbar an einem Träger befestigt.

Insbesondere ist die Hubbewegung zumindest eines der Ventile der Schaltungseinheit parallel zu einer Vorformlingslängsachse und/oder zu einer Bewegungsrichtung einer Reckstange.

Insbesondere ist die Reckstange koaxial zu einem ersten Ventil und/oder dem Verbindungsventil ausgebildet.

Insbesondere können das erste und/oder das Verbindungsventil fest mit der Blasdüse verbunden werden. Durch einen Hub der Blasdüse beim Abdichtvorgang kann somit der Totraum bzw. das Gesamtvolumen weiter reduziert werden.

Es ist auch daran gedacht, ein erstes Ventil oder das Verbindungsventil als Blasdüse auszuführen, welche sowohl die zu formende Masse als auch eine Mediumzufuhr abdichten kann. Insbesondere kann auch der Antrieb der Blasdüse für ein Öffnen eines Ventils verwendet werden.

Insbesondere weist mindestens eine Hülse einen Vorsprung auf, welcher als Dichtfläche für eine andere Hülse vorgesehen ist. Der Vorsprung ist insbesondere ringförmig. Insbesondere weist der Querschnitt dieses Rings eine dreieckige Fläche auf, welcher eine kegelförmige Dichtfläche ausbildet. Es kann sich aber auch um eine rechteckige oder, bei der Verwendung von O-Ringen, um eine runde oder halbrunde Fläche handeln.

Insbesondere werden zwei Strömungswege für das Medium in den Bereich des Hohlkörpers bereitgestellt, wobei ein Strömungsweg im Bereich einer Mündung des Hohlkörpers endet und von der Blasdüse gebildet wird und ein weiterer Strömungsweg in der Nähe des der Mündung des Hohlkörpers gegenüberliegenden Endes endet und durch eine in den Hohlkörper einfahrbare Stange, insbesondere eine Reckstange, bereitgestellt wird.

Um den ersten Hohlraum möglichst klein zu halten, grenzen an diesen insbesondere nicht mehr als vier, insbesondere nicht mehr als drei, insbesondere nicht mehr als zwei Ventile.

Insbesondere ist das Volumen des Bereichs des ersten Hohlraums, welches sich zwischen dem ersten Ventil und einem Austrittsfenster aus der Ventileinheit befindet mindestens 1,2 mal, insbesondere mindestens 1,5 mal, so groß wie das Volumen des Bereichs des zweiten Hohlraums, welches sich zwischen dem zweiten Ventil und einem Austrittsfenster aus der Ventileinheit befindet. Durch eine Anordnung des ersten Ventils am oder im Hohlkörper kann das Volumen des ersten Hohlraums auch Null betragen, von daher kann das Verhältnis der Volumen der Hohlräume zueinander auch gegen unendlich gehen.

Bei den Antrieben für die Ventile kann es sich um pneumatische, elektrische, elektromagnetische, magnetische oder um mechanische Antriebe handeln. Es können hierzu Direktantriebe, Linearmotoren, Servomotoren, Piezoelemente, Kurvensteuerungen oder als pneumatischer Antrieb ausgestaltete Vorsteuerventile verwendet werden.

Insbesondere grenzen an den ersten Hohlraum nur die zwei Ventile der Schaltungseinheit, es können aber auch weitere erste Ventile angrenzen.

Bei der Hohlkörperherstellungsmaschine handelt es sich insbesondere um eine kontinuierlich arbeitende Streckblasmaschine, an der eine Vielzahl von Blasstationen angeordnet sind und in die temperierte, reagenzglasförmige Vorformlinge (V) aus Kunststoff, insbesondere PET, eingegeben und in den Blasstationen zu Hohlkörpern (F) umgeformt werden. Die Blasstationen können hierbei gleichmäßig verteilt entlang des Umfangs eines Blasrades angeordnet sein. Die Vorformlinge werden während des Blasens kontinuierlich in der Form der Blasstation entlang eines kreisförmigen Transportpfads transportiert. Bei solchen Hohlkörperherstellungsmaschinen wird die Druckluft von einem stationär angeordneten Kompressor über einen Kanal einer Drehverbindung in einen drehenden Teil der Maschine hineingeführt und insbesondere bei Nutzung eines reinen Wiedergewinnungsspeichers über einen weiteren Kanal in der Drehverbindung zur weiteren Verwendung wieder hinausgeführt. Der Kompressor kann sich in manchen Ausführungsformen auch auf dem Blasrad befinden.

Die Aufgabe wird weiterhin durch ein Verfahren zum Umformen einer Masse in einen Hohlkörper mittels eines unter Druck stehenden Mediums gelöst, welches die folgenden Schritte, insbesondere in der angegebenen Reihenfolge, aufweist:
a) Einbringen eines zu verformenden Materials in eine Form,
b) Öffnen eines zweiten Ventils und Leiten eines unter einem zweiten Druck stehenden Mediums von einem zweiten Druckspeicher zu dem zu verformenden Material,
c) Auffüllen eines zweiten Hohlraums mit dem unter dem zweiten Druck stehenden Medium, welcher sich zwischen dem zu verformenden Material und dem zweiten Ventil befindet,
d) Absperren der Verbindung vom zweiten Druckspeicher zu dem zu verformenden Material durch das zweite Ventil,
e) Öffnen eines ersten Ventils und Leiten eines unter einem ersten Druck stehenden Mediums von einem ersten Druckspeicher zu dem zu verformenden Material, wobei der erste Druck größer ist als der zweite,
f) Auffüllen eines ersten Hohlraums mit dem unter dem ersten Druck stehenden Medium, welcher sich zwischen dem zu verformenden Material und dem ersten Ventil befindet.

Erfindungsgemäß weist der erste Hohlraum im Schritt f) ein geringeres Volumen auf als der zweite Hohlraum im Schritt c).

Bei Schritt c) ist insbesondere das weitere Ventil (Verbindungsventil) (sofern vorhanden, wenn nicht, dann das erste Ventil auf der entsprechenden Seite) geöffnet, welches sich zwischen dem zweiten Ventil und dem zu verformenden Material befindet. Dieses Ventil kann in Schritt d) oder zwischen Schritt d) und e) geschlossen werden, so dass ein Teil des zweiten Hohlraums nicht mit dem Medium aus dem ersten Druckspeicher im Schritt f) ausgefüllt wird (Schritt i).

Im Schritt c) kann auch der erste Hohlraum vollständig mit Medium befüllt werden.

Zusätzlich können weiterhin auch folgende Schritte durchgeführt werden:
- Öffnen eines mit einem dritten Druckspeicher verbundenen Ventils und Leiten eines unter einem dritten Druck stehenden Mediums von einem dritten Druckspeicher zu dem zu verformenden Material, wobei der dritte Druck kleiner ist als der zweite Druck und Ausfüllen des zweiten Hohlraums, wobei der zweite Hohlraum sowohl an das zweite Ventil, das mit dem dritten Druckspeicher verbundene Ventil und das zu verformende Material angrenzt, oder Ausfüllen eines dritten Hohlraums, wobei der dritte Hohlraum an das mit dem dritten Druckspeicher verbundene Ventil und an das zu verformende Material angrenzt, mit dem dritten Medium (Schritt ii).
- Öffnen eines Auslassventils und Ableiten des Mediums aus dem Hohlkörper heraus in die Atmosphäre (Schritt v).
- Öffnen des zweiten, des mit dem dritten Druckspeicher verbundenen oder eines mit einem vierten Druckspeicher verbundenen Ventils und Zurückleiten des Mediums in den zweiten, dritten oder vierten Druckspeicher (Schritt iii).
- Wenn im Schritt iii) das Medium in den zweiten Druckspeicher zurückgeleitet wurde, kann zusätzlich ein Öffnen des mit dem dritten Druckspeicher verbundenen Ventils und ein Zurückleiten des Mediums in den dritten Druckspeicher stattfinden (Schritt iv).

Die Schritte ii), iii), iv) und v) können jeweils einzeln und unabhängig voneinander oder in Kombination durchgeführt werden, bis auf dass Schritt iv) zumindest einen dritten Druckspeicher bedingt. Der Schritt ii) wird dabei nach dem Schritt a) und vor dem Schritt b) durchgeführt, der Schritt iii) nach dem Schritt f).

Schritt v) wird insbesondere nach dem Schritt f) durchgeführt, insbesondere auch nach dem Schritt iv), wenn iv) durchgeführt wird.

Im Schritt a) findet dabei insbesondere eine Abdichtung der zu verformenden Masse gegenüber der Umgebung statt.

Im Schritt ii) grenzen die Hohlräume bevorzugt zusätzlich an das erste Ventil.

Bei den Schritten iii) iv) und v) wird bevorzugt auch das Verbindungsventil geöffnet (sofern vorhanden).

Die Aufgabe wird auch durch eine Hohlkörperherstellungsmaschine gelöst, umfassend mindestens eine Vorrichtung zur Temperierung von hohlkörperartigen Vorformlingen aus Kunststoff mit lediglich einer Mündungsöffnung, eine Einheit zur Übergabe der temperierten Vorformlinge an eine Blasstation, in der die Vorformlinge mittels Beaufschlagung durch ein Medium gegen die Wände einer Blasform expandiert werden, wobei mindestens zwei Druckspeicher mit einer an der Blasstation angeordneten Ventileinheit in Verbindung stehen und wobei die Ventileinheit mindestens drei Ventile umfasst, wobei durch ein zweites Ventil der Ventileinheit ein Medium aus dem zweiten Druckspeicher dem Vorformling zugeführt wird und durch ein erstes Ventil ein erstes Medium aus dem ersten Druckspeicher, wobei das Medium im ersten Druckspeicher einen höheren Druck aufweist als das Medium im zweiten Druckspeicher, und einem dritten an der Ventileinheit angeordneten Ventil, durch welches Medium aus dem expandierten Hohlkörper gegen die Atmosphäre ableitbar ist, und mit einer an der Blasstation angeordneten Reckstange zur Dehnung eines Vorformlings entlang dessen Längsachse während des Blasvorgangs, wobei das erste Ventil mittels einer Relativbewegung zwischen Ventil und Vorformling in den Mündungsbereich des Vorformlings über einen Antrieb einfahrbar ist und sich der Ausgang des ersten Ventils während der Zuführung des Mediums aus dem ersten Druckspeicher innerhalb des Vorformlings bzw. Hohlkörpers befindet und der Vorformling während der Zuführung von Medium aus dem ersten Druckspeicher von einer Dichtung an einer Vorformlingmündungskante oder an einer Innenfläche des Vorformlings abgedichtet wird, so dass sich das Medium nach Verlassen des ersten Ventils und während der Öffnungszeit des ersten Ventils ausschließlich im Innenbereich des Vorformlings befindet, wobei der Innenbereich durch die Vorformlingmündungskante abgegrenzt wird, und wobei die Reckstange bei der Längsdehnung des Vorformlings bereichsweise an mindestens einem sich im Innenbereich befindenden Ventil vorbei- oder hindurchgefahren wird.

Auf diese Weise kann das durch Medium aufzufüllende Gesamtvolumen reduziert werden. Es können hier auch alle Mittel und Ausführungsformen der ersten Lösung und der Figuren zum Einsatz kommen, wobei in diesem Fall der erste Hohlraum und der zweite Hohlraum das gleiche Volumen aufweisen können, bzw. auch identisch sein können.

Die Aufgabe wird auch durch eine Hohlkörperherstellungsmaschine gelöst, umfassend mindestens eine Form, innerhalb derer Hohlkörper mittels Beaufschlagung durch ein unter Druck stehendes Medium herstellbar sind, mindestens eine Ventileinheit, welche mit der Form derart in Wirkverbindung steht, dass das Medium zu einem und/oder weg von einem sich in der Form befindenden, zu formenden Material zu- und ableitbar ist, mindestens einen ersten Druckspeicher für die Bereitstellung von Medium höheren Drucks, welcher an eine der Ventileinheit zugeordneten Schaltungseinheit direkt angeschlossen ist, mit mindestens einem weiteren in der Ventileinheit enthaltenem Ventil zur Zu- oder Abführung des Mediums, welches auf einer Seite über eine Leitung mit der Schaltungseinheit und auf der anderen Seite mit einem weiteren Druckluftspeicher für Medium geringeren Drucks verbunden ist. Die Schaltungseinheit schließt dabei insbesondere unmittelbar an ein mit dem zu formenden Material verbundenen Volumen an.

Es können hier ebenfalls alle Mittel und Ausführungsformen der ersten Lösung und der zugeordneten Figuren zum Einsatz kommen.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Draufsicht einer erfindungsgemäßen Hohlkörperherstellungsmaschine.
Figuren 2a bis 2i zeigen verschiedene Ausführungsformen der Erfindung in Schaltungsplänen
Figuren 3a bis 3d zeigen eine Ausführungsform der Erfindung in einer Schnittdarstellung.
Figur 4 zeigt eine weitere Ausführungsform der Erfindung in einer Schnittdarstellung.
Figur 5 zeigt eine weitere Ausführungsform der Erfindung in einer Schnittdarstellung.
Figur 6 zeigt eine weitere Ausführungsform der Erfindung in einer Schnittdarstellung.
Figur 7 zeigt eine weitere Ausführungsform der Erfindung in einer Schnittdarstellung.
Figur 8 zeigt eine weitere Ausführungsform der Erfindung in einer Schnittdarstellung.
Figuren 9 und 10 zeigen Varianten zu der in Figur 8 gezeigten Ausführungsform der Erfindung.
Figur 11 zeigt eine weitere Ausführungsform der Erfindung in einer Schnittdarstellung.
Figur 12 zeigt eine weitere Ausführungsform der Erfindung in einer schematischen Darstellung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

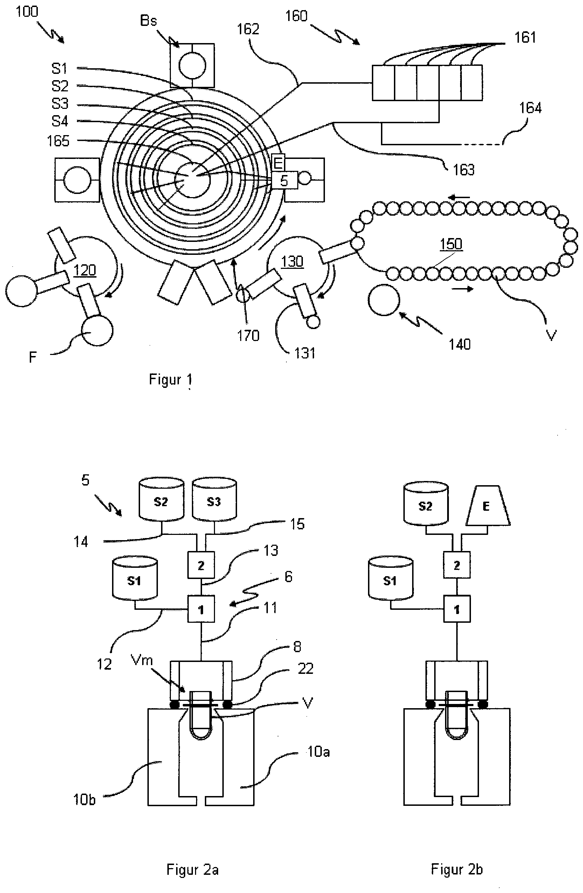

**Figur 1** zeigt eine schematische Draufsicht einer Hohlkörperherstellungsmaschine 100. In diesem Ausführungsbeispiel ist sie als kontinuierlich arbeitende Streckblasmaschine ausgeführt. Vorformlinge V werden über einen sogenannten Sägezahnstern 140 einer Vorrichtung zur Temperierung 150 zugeführt, in der die Vorformlinge V mittels auf einer umlaufenden Kette angeordneten Heizdornen durch einen nicht näher dargestellten Heiztunnel, bestehend aus einer Vielzahl von Infrarotheizstrahlern und gegenüberliegenden Reflektoren, kontinuierlich durchgeführt werden. Bei der Vorrichtung zum Temperieren 150 kann es sich auch um einen Rundläufer handeln, an dessen Umfang eine Vielzahl von Erwärmungsstationen wie Mikrowellenresonatoren oder Heiztaschen angebracht sind (nicht gezeigt). Nach der Temperierung werden die Vorformlinge V von Greifern 131, welche auf einem Einlaufstern 130 umlaufen, an ein Blasrad 170 übergeben, auf dessen Umfang eine Vielzahl von Blasstationen Bs angeordnet ist. Nach dem Formgebungsprozess in der Blasstation Bs werden die fertig geblasenen Flaschen F von einem Entnahmestern 120 entnommen. Anschließend erfolgt ein Transport der Flaschen F zu einer nicht gezeigten Etikettierung, Abfüllung und Verpackung. Die Transportwege der Vorformlinge V und der Flaschen F sind jeweils mit Pfeilen angedeutet.

Die einzelnen Blasstationen Bs werden über einen Kompressor 160 mit mehreren Kompressorstufen 161, mit einem gasförmigen Medium, hier Druckluft, versorgt. In der ersten Stufe (rechts dargestellt) wird Luft auf einen Druck von beispielsweise 5 bar komprimiert, in der nächsten Stufe auf 10 bar und so weiter, bis sie nach der Endstufe einen Druck von 45 bar aufweist. Sodann wird die Luft über eine Zuführleitung 162 einem Drehverteiler 165 zugeführt, welcher den stationären Teil der Hohlkörperherstellungsmaschine 100 mit dem drehenden Teil (Blasrad 170) verbindet. Auf dem Drehverteiler 165 sitzen ebenfalls mehrere nicht dargestellte Druckminderer, welche den vom Kompressor 160 bereitgestellten Druck auf unterschiedliche Druckniveaus für ebenfalls auf dem Blasrad 170 angebrachte Ringleitungen S1 bis S3 reduzieren. Die Ringleitungen S1, S2, S3 dienen als Druckspeicher und -verteiler für die einzelnen Blasstationen Bs auf dem Blasrad 170. In Ringleitung S3 wird ein Vorblasdruck von beispielsweise 10 bar bereitgestellt, in Ringleitung S2 ein Zwischenblasdruck von beispielsweise 20 bar und in Ringleitung S1 ein Fertigblasdruck von beispielsweise 35 bar. Jede Blasstation Bs umfasst dabei eine Ventileinheit 5, welche mit den einzelnen Ringleitungen S1, S2, S3 verbunden ist und welche die einzelnen Ringleitungen S1, S2, S3 mit dem aufzublasenden Vorformling V verbindet. Nach dem Abdichten des Vorformlings V mittels einer Blasdüse 8 (nächste Figur) wird dieser nacheinander und in folgender Reihenfolge mit den einzelnen Ringkanälen verbunden: S1, S2, S3. Nach dem fertigen Expandieren wird die Luft aus der Flasche F - immer noch unter dem Fertigblasdruck stehend - zuerst wieder in den Ringkanal S2 zurückgeführt, vorteilhafterweise so lang, bis der Druck in der Flasche F annähernd den Druck im Ringkanal S2 erreicht hat. Anschließend wird die Luft in der Flasche F - jetzt annähernd unter dem Druck des Ringkanals S2 stehend - dem Kanal S3 zugeführt. Es kann auch vorteilhaft sein, zuerst den Vorblaskanal S3 für eine Rückführung der Luft zu nutzen, wenn sichergestellt werden soll, dass in diesem immer ein Mindestdruck bereitgestellt werden soll. Auch kann die Rückführzeit über den Druck in einem Kanal S2, S3, S4 mittels eines nicht dargestellten Drucksensors geregelt werden. Auf die Druckminderer, welche den Druck für die Kanäle S2 und S3 zur Verfügung stellen, könnte während der Produktion auch verzichtet werden, wenn genügend Luftmenge recycelt wird, für ein Anfahren der Blasmaschine sind sie jedoch von Vorteil.

Anstatt nun die verbleibende Luft über einen Auslass E an die Atmosphäre entweichen zu lassen, wird die Blasluft anschließend nochmals bis zu einem Niveau von 3-5 bar in den Kanal S4 zurückgespeist. Da das Vorblasen aus Kanal S3 unter einem gewissen Druck von hier 10 bar den ersten Schritt in der Herstellung des Hohlkörpers darstellen muss, dient der Ringkanal S4 aufgrund seines niedrigeren Druckniveaus in diesem Ausführungsbeispiel ausschließlich der (Zwischen-)Speicherung von rückgeführter Blasluft aus der Flasche F und nicht zum Blasen. Von dort aus kann die Luft entweder noch auf dem Blasrad 170 beispielsweise Vorsteuerventilen 9 oder anderen Antrieben der Blasstationen (z.B. einem Antrieb für Reckstangen) zur Verfügung gestellt werden oder über eine weitere Leitung und durch den Drehverteiler 165 zurück in den stationären Teil der Maschine über Leitung 163 überführt werden. Von dort kann die Luft beispielsweise in eine Zwischenstufe des Kompressors 161 zurückgespeist oder über Leitung 164 dem Hallendruckluftnetz oder anderen Verwendungen wie einer Flaschenbodennachkühlung oder einer Etikettier- oder Füllmaschine zugeführt werden.

Die Ringleitungen S1, S2, S3, S4 können auch nur bereichsweise ringförmig ausgebildet sein. Beispielsweise kann ein Ringkanal S1, S2, S3, S4 auch durch zwei halbkreisförmige Hälften gebildet werden. Allgemein sollen im Folgendem die Druckspeicher mit S bezeichnet werden.

Der bereits erwähnte Auslass E ist an jeder Station Bs vorhanden und dient dem Auslass der verbleibenden 3-5 bar in der Flasche F, bevor die Blasdüse 8 wieder hochgefahren und die Flasche F entnommen wird.

Die **Figuren 2a bis 2i** zeigen unterschiedliche Ausführungsformen der Erfindung. Die Bezugszeichen sind wegen der Übersichtlichkeit teilweise nur einmal gesetzt und sollen hier bei den jeweiligen Figuren analog verwendet werden. Erste Ventile werden mit 1, 1 a, 1 b etc., das weitere Ventil (Verbindungsventil) mit 3 und die zweiten Ventile mit 2, 2a, 2b etc..

In **Figur 2a** ist eine Ventileinheit 5 sowie die Blasform 10 zu sehen, bestehend aus den Hälften 10a und 10b, alle Teil einer Blasstation Bs. Die Hälften 10a und 10b sind dabei zum Ein- und Ausbringen von Hohlkörpern V, F relativ zueinander auseinander fahr- bzw. schwenkbar, insbesondere in der Zeichnung nach rechts bzw. links. Ebenfalls ist die Blasdüse 8 gezeigt, welche sich mit der Dichtung 22 auf die Form 10a, 10b dichtend anlegt. Ebenfalls wäre es möglich, durch Berührung des Vorformlings V an dessen Tragring oder irgendwo am Mündungsbereich Vm abzudichten.

Zu sehen sind weiterhin drei Druckspeicher S1, S2, S3 für unter Druck stehendes Medium. Im ersten Druckspeicher S1 wird Medium unter einem höheren Druck gespeichert als in S2 und S3. In S2 wird Medium unter einem höheren Druck gespeichert als in S3. Zu sehen ist weiterhin eine Schaltungseinheit 6, welche ein Ventil 1 aufweist, welches einerseits über Druckluftzuführleitung 12 mit dem Druckspeicher S1 verbunden ist und andererseits über Leitung 13 mit einem weiteren Ventil 2, welches auf dessen anderer Seite über Leitungen 14 und 15 mit dem Druckspeiche S2 und Druckspeicher S3 verbunden ist. Das Ventil 1 ist über eine Leitung 11 auf der Auslassseite direkt, also ohne Zwischenschaltung weiterer Ventile, mit der Blasdüse 8 verbunden. Das Ventil 1 kann sowohl die Verbindung von Leitung 12 (S1) zu Leitung 11 als auch die Verbindung von Leitung 13 (S2, S3) zu Leitung 11 (V) freigeben. Das Ventil 2 kann sowohl eine Verbindung von Leitung 14 zu Leitung 13, als auch von Leitung 15 zu Leitung 13 freigeben. Bei beiden Ventilen 1, 2 kann es sich um Mehrwegeventile oder

Doppelsitzventile handeln. Der Blasprozess läuft nun nach der Eingabe des Vorformlings V in die Blasform 10a, 10b und dem Abdichten der Blasdüse wie folgt ab:
a) Schalten des Ventils 2 zur Verbindung von Leitung 15 mit Leitung 13,
b) Schalten des Ventils 1 zur Verbindung der Leitung 13 mit Leitung 11,
c) Schalten des Ventils 2 zur Verbindung von Leitung 14 zu Leitung 13,
d) Schalten des Ventils 1 zur Verbindung von Leitung 12 mit Leitung 11,
e) Schalten des Ventils 1 zur Verbindung der Leitung 11 mit Leitung 13,
f) Schalten des Ventils 2 zur Verbindung Leitung 13 mit Leitung 15,
g) Schließen der Ventile 1 und 2
h) Abheben der Blasdüse.

Im Ausgangszustand sind alle Ventile geschlossen. In den Schritten a) bis c) wird der Hohlkörper V mit den niedrigeren Drücken beaufschlagt, in Schritt d) wird er mit dem höheren Druck fertig geformt. In den Schritten e) und f) wird das Druckmedium wieder teilweise in die Speicher S2 und dann S3 zurückführt. In Schritt h) wird der Hohlkörper wieder entlüftet, so dass sich nur noch Atmosphärendruck in ihm befindet. Es wird der Druck im Vorformling V bzw. im Hohlkörper F dreistufig kaskadenförmig erhöht und kaskadenförmig gesenkt. Für das Medium unter höherem Druck in Speicher S1 stellt dabei nur Leitung 11 (und das Volumen der Blasdüse 8) den Totraum dar. Der Totraum für die zwei geringeren Drücke sind Leitung 13 und 11. Die Verfahrensschritte a) und b) können auch gleichzeitig stattfinden, ansonsten ist die Reihenfolge bevorzugt so einzuhalten wie den Buchstaben nach dargestellt. Im Gegensatz zur Ausführung nach Figur 1 wurde hier auf ein Auslassventil und einen zusätzlichen reinen Recyclingspeicher S4 verzichtet.

**Figur 2b** umfasst-eine Vorrichtung, welche nur für einen zweistufigen Blasprozess geeignet ist. Anstatt des zusätzlichen Speichers S3 ist hier ein Auslassventil E vorhanden, welches den Vorteil aufweist, dass der Restdruck im Hohlkörper F gezielt abgeleitet werden kann - bevorzugt in einen Schalldämpfer. Hier wird zunächst Speicher S2 über die Ventile 2 und 1, dann Speicher S1 über eine Schaltung von Ventil 1 mit dem Hohlkörper V verbunden. Nach dem Verformen des Hohlkörpers V wird Ventil 1 umgeschaltet und das Medium in Speicher S2 über das immer noch unverändert gebliebene Ventil 2 hineinrecycelt. Danach wird Ventil 2 geschalten, dass der Hohlkörper F über den Auslass E mit der Atmosphäre verbunden wird. Anschließend werden Ventil 1 und 2 wieder geschlossen.

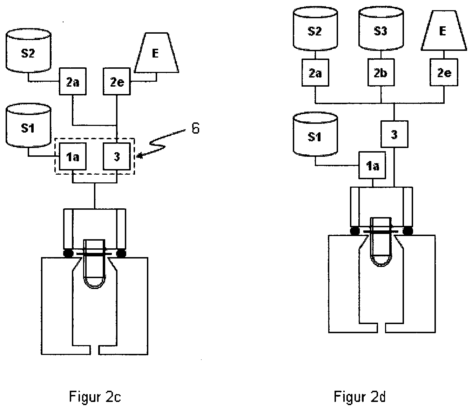

**Figur 2c** zeigt eine Anordnung, bei der im Vergleich zu Figur 2b das Ventil 2 mit separaten Ventilen 2a und 2e und das Ventil 1 mit separaten Ventilen 1a und 3 ersetzt wurde. Insbesondere handelt es sich bei den Ventilen 1a, 2a, 2e und 3 um einfache Sitzventile. Die Reihenfolge der Freigabe von den Verbindungen zwischen Hohlkörper V, F und Speicher S1, S2 und Auslass E bleibt hier die gleiche wie in Figur 2b. Mit dieser Anordnung ist es beispielsweise möglich, den Hohlkörper V, F mittels einem kontinuierlichem Durchfluss von Medium aus Speicher S1 in den Speicher S2 und/oder in den Auslass E zu kühlen. Die Ventile 1 a und 3 bilden dabei die Schaltungseinheit 6.

Es sei auch noch erwähnt, dass das Recycling von Druckmedium in einen Speicher S2, S3, S4 bei allen Ausführungen der Figuren nicht unbedingt nötig ist. Wenn man die Prozesszeit auf ein Minimum setzen will, kann man den fertig expandierten Hohlkörper F auch grundsätzlich gleich gegen die Atmosphäre über den Auslass E oder das Abheben der Blasdüse 8 entlüften.

**Figur 2d** zeigt eine Ausführungsform, geeignet zum dreistufigen Expandieren von Hohlkörpern. Die Reihenfolge der Freigabe von den Verbindungen zwischen Hohlkörper V, F und Speichern S1, S2 und Auslass E bleib hier die gleiche wie in Figur 2b mit der Ausnahme, dass zwischen dem Vorblasen aus Speicher S3 und dem Fertigblasen aus Speicher S1 noch ein Zwischenblasen aus Speicher S2 durch Schaltung des Ventils 2a erfolgt. Die Schaltungseinheit 6 könnte auch aus einem Mehrwegeventil oder einem Doppelsitzventil bestehen (nicht dargestellt). Zu sehen sind hier auch zwei voneinander getrennte Leitungen von Ventil 1a zur Blasdüse 8 und von Ventil 3 zur Blasdüse 8, während in **Figur 2c** eine zumindest bereichsweise gemeinsame Leitung offenbart. Eine der Leitungen könnte auch zu einer Reckstange oder einer Spülstange gehen.

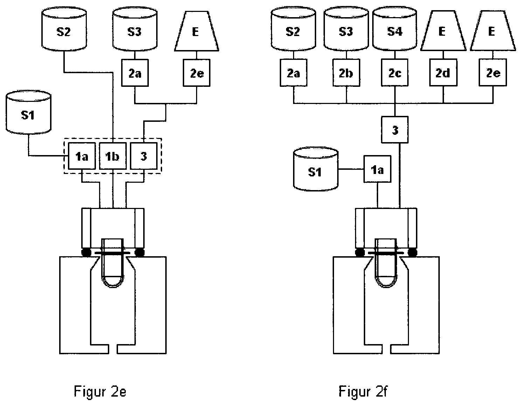

**Figur 2e** zeigt eine Ausführungsform der Erfindung, bei der sich die Schaltungseinheit 6 aus drei Sitzventilen 1 a, 1 b, 3 zusammensetzt. Dies kann von Vorteil sein, wenn der Druckspeicher S2 Medium mit einem Druck enthält, welcher sehr hoch ist im Vergleich zu dem Medium in Speicher S3. Die Drücke in den einzelnen Speichern könnten folgendermaßen hoch sein: S1: 40 bar, S2: 35 bar, S3: 10 bar. Bei dieser Konfiguration kann es sich schon lohnen, dass drei Ventile in die nah an der Blasdüse sitzende Schaltungseinheit 6 verbaut werden, weil so der Totraum für zwei hohe Drücke reduziert werden kann.

In **Figur 2f** ist eine Ausführungsform dargestellt, in der die Schaltungseinheit 6 nur aus zwei Sitzventilen 1a und 3 besteht. An ersterem ist der Hochdruckspeicher S1 angeschlossen, an Ventil 3 sind fünf weitere Sitzventile 2a, 2b, 2c, 2d, 2e angeschlossen. Die Ventile werden hier in folgender Reihenfolge aktiviert:
a) Öffnen Ventil 3 und 2b zum Vorblasen, anschließend Schließen Ventil 2b
b) Öffnen Ventil 2a zum Zwischenblasen
c) Schließen der Ventile 2a und 3
d) Öffnen Ventil 1 a zum Fertigblasen und anschließend Schließen von Ventil 1 a
e) Öffnen Ventil 3 und 2a zum Recyceln des Druckmediums aus der Flasche in Speicher S2
f) Schließen Ventil 2a und Öffnen Ventil 2b zum Recyceln des Druckmediums aus der Flasche in Speicher S3
g) Schließen Ventil 2b und Öffnen Ventil 2c zum Recyceln des Druckmediums aus der Flasche in Speicher S4
h) Schließen Ventil 2c und Öffnen der Ventile 2d und 2e zum Entlasten des Drucks aus dem Hohlkörper F.

Diese Ausführungsform entspricht im Allgemeinen der aus Figur 1, kann aber auch bei stationären Maschinen eingesetzt werden.

Vom Aufbau her könnten bei allen denkbaren Ausführungsformen die Ventile (1 a, 1b und 3) der Schaltungseinheit 6 ringförmig die Längsachse des Vorformlings V umgeben (nicht gezeigt).

Die zweiten Ventile 2a, 2b etc. könnten sich in einem zweiten, von der Form weiter entfernt liegenden Ring um die verlängerte Vorformlingslängsachse befinden.

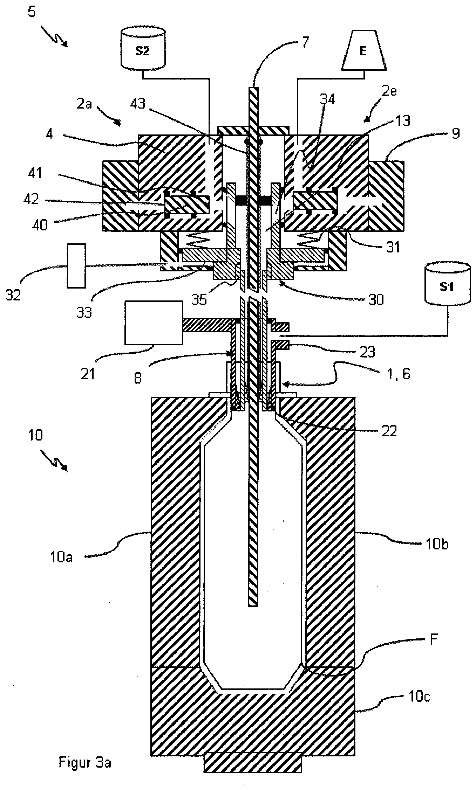

**Figur 3a** zeigt eine weitere erfindungsgemäße Ausführungsform. Diese ist prinzipiell mit der Ausführungsform von der Figur 2b vergleichbar, nur dass anstatt von Ventil 2 zwei Sitzventile 2a, 2e an der Ventileinheit 5 angebracht sind. Desweiteren könnten auch noch weitere zweite Ventile 2b, 2c etc. auf der selben Höhe wie Ventil 2a, 2e um den Hauptkanal 13, jedoch in die Zeichnungsebene hinein bzw. aus dieser herausstehend angebracht sein, welche hier jedoch nicht dargestellt sind.

Das Ventil 2e ist über eine im Ventilblock 4 vorhandene senkrechte Bohrung an den Auslass E angeschlossen. Auf die gleiche Weise ist das Ventil 2a an den Druckspeicher S2 angeschlossen. Jedes Sitzventil 2a, 2e besteht aus einem Ventilkolben 40, welcher in einer waagrechten Bohrung im Ventilblock 4 geführt ist und von einem Vorsteuerventil 9 pneumatisch an dessen Ansteuerfläche 42 angesteuert wird. Das Vorsteuerventil 9 ist insbesondere elektrisch bzw. magnetisch wirkend. Die Ansteuerfläche 42 weist einen größeren Durchmesser als die Dichtfläche 41 auf (hier zur Vereinfachung nicht dargestellt), auf diese Weise kann der Vorsteuerdruck geringer ausgelegt werden, normalerweise liegt dieser zwischen 5 und 10 bar. In die geöffnete Stellung gemäß Ventil 2a in der Figur 3a kommt der Kolben 40, indem das Vorsteuerventil 9 drucklos geschaltet wird und der Blasdruck innerhalb der Flasche F oder der über dem Druckspeicher S2 anliegende Druck den Kolben 40 zurücktreibt. Der Kolben 40 besteht vorzugsweise aus Kunststoff, der Ventilblock 4 aus Metall. Auf der dem Hauptkanal 13 zugewandten Seite kann der Kolben 40 mit seiner Dichtfläche 41 den Zufluss oder Abfluss von Medium durch Abdichtung unterbinden. Diese Stellung ist hier auf der rechten Seite beim Ventil 2e dargestellt.

Der Ventilblock 4 ist in dieser Ausführung fest an der Blasstation Bs angebracht, kann aber auch beweglich (zum Abheben und Senken der Blasdüse 8, wenn die Blasdüse 8 fest mit ihm verbunden ist) ausgeführt werden.

Zu sehen ist auch, dass die Blasform 10 aus drei Teilen besteht, zur Seite bewegbare Seitenteile 10a, 10b und ein vertikal bewegbarer Boden 10c. Ein zusätzliches Bodenteil 10c muss häufig deswegen verwendet werden, weil im Boden des Hohlköpers F Hinterschnitte vorhanden sind, welche bei der Entformung mit zwei Seitenteilen zu Kollisionen der Formen 10 mit der Flasche F führen würden.

Der Ventilblock 4 weist in seiner Mitte einen Hohlraum auf, in dem bereichsweise ein rohrförmiges, mit mehreren Absätzen versehenes Steuerelement 30 geführt wird, welches mehrere seitliche Bohrungen 34 aufweist, um Medium in den inneren Hauptkanal 13 befördern zu können. Das Steuerelement 30 ist mittels einer Feder 31 in Schließposition für den Fertigblasdruck vorgespannt, so dass beim Ausfall des Antriebs (Vorsteuerventil 32) keine Luft vom Speicher S1 freigegeben wird. Angesteuert wird es über ein Vorsteuerventil 32, welches die ringförmige Fläche 33 mit Druckluft beaufschlagen kann. Durch diese Druckbeaufschlagung wird auch das untere Ende des Steuerelements 30 hochgezogen und somit die Schaltungseinheit 6, bzw. das Ventil 1 betätigt.

Das Medium unter einem höheren Druck in Speicher S1 wird über eine mit einem Strich dargestellte Schlauchleitung mit dem Anschluss 23 verbunden und liegt ständig im nach oben durch einen Dichtring abgedichteten Ringraum zwischen Blasdüse 8 und Steuerelement 30 an, bis das Steuerelement 30 hochgefahren wird und die Verbindung zum Hohlkörper V, F freigegeben wird.

Die rohr- bzw. hülsenförmig ausgebildete Blasdüse wird über einen Antrieb 21 betätigt. Die Antriebe 21 und 32 für die Blasdüse 8 und das Steuerelement 30 können dabei gleichwirkend ausgebildet sein, es sind aber auch Kurvensteuerungen oder Linearantriebe, insbesondere tubulare Direktantriebe und weitere Kombinationen denkbar.

Zur leichteren Austauschbarkeit ist der untere rohrförmige Teil des Steuerelements 30 mit einem Gewinde 35 an den oberen Teil des Steuerelements 30 befestigt. Der obere Teil des Steuerelements 30 wirkt sozusagen als Träger für den unteren, austauschbaren Teil. Dies wird bei der Verarbeitung von Vorformlingen V mit unterschiedlich großen Neckdurchmessern benötigt. Zum Abschrauben befindet sich eine nicht gezeigte Sechskant-Einfräsung am unteren Teil. Ebenfalls wäre es denkbar, die Lösbarkeit über einen Schnellwechselmechanismus zu realisieren, welcher beispielsweise über eine Bajonettverbindung verfügen kann.

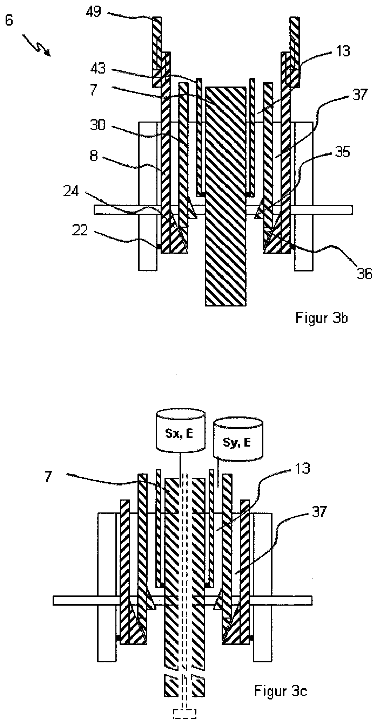

Das Ventil 1 umfasst dabei in dieser Ausführung kegelförmige Flächen 24, 35, 36, die jeweils an das Steuerelement 30 und die Blasdüse 8 am unteren Ende angebracht sind. **Figur 3b** zeigt dies in einer vergrößerten Ansicht. Die Kegel der Dichtungen 35 und 36 sind insbesondere aus einem Kunststoff hergestellt, während der Kegel 36 und das untere Ende der rohrartigen Führung 43 für die Reckstange 7 aus Metall sind.

Durch die lineare Bewegung des Steuerelements 30 und der Blasdüse 8 relativ zueinander kann entweder der Hauptkanal 13 oder der rohrförmige Raum 37 zwischen der Blasdüse 8 und Steuerelement 30 mit dem Hohlkörper V, F verbunden werden. Die Antriebe 21 und 32 sind dabei aufeinander synchronisiert, so dass nicht gleichzeitig die Hohlräume 37 und 13 miteinander verbunden werden. Hierfür ist bevorzugt mindestens ein Antrieb 21 und 32 ein kraftgesteuerter Servomotor, welcher dem anderen Antrieb derart folgen kann, dass während der Bewegung die Dichtung zweier Kegel 24 zu 36 bzw. 35 zu 43 hält. Dies könnte aber auch durch einen pneumatischen Antrieb mit ständigem Druck realisiert werden.

Das Ventil 1 bzw. die Schaltungseinheit 6 befindet sich insbesondere im umschlossenen Volumen des Hohlkörpers F selbst. Dies wird hier unter anderem dadurch erreicht, dass die Blasdüse 8 radial nach außen hin den Hohlkörper an dessen Innenseite mit Dichtung 22 abdichtet. Das Gesamtvolumen für das Medium unter höherem Druck ist hierbei also kleiner als das vom Vorformling V umschlossene Volumen.

Die Dichtung 22 kann während den Blasvorgängen bzw. der von der Blasdüse 8 durchgeführten Ventilbewegung entlang der Innenseite des Mündungsbereichs des Vorformlings V entlanggleiten. Die Dichtung 22 kann dabei eine Entformungsschräge des Vorformlings V ausgleichen. Alternativ wäre es genauso denkbar, die Ventilfunktion ausschließlich mit dem rohrförmigen Körper 43 zur Reckstangenführung und dem Steuerelement 30 bereitzustellen. Ein entsprechender Antrieb für die Hülse 43 könnte direkt oberhalb des Ventilblocks 4 (wenn für die Ausführung der Figur 3a vorgesehen) vorgesehen werden. Die Dichtung 22 könnte auch mittels einer Bohrung in der Blasdüse 8 mittels Druckmedium an den Hohlkörper V, F über ein nicht gezeigtes Ventil aktiv gesteuert angedrückt werden.

Der Totraum für das Medium in Speicher S2 beispielsweise setzt sich aus jedem Volumen zusammen, welches rechts von der Dichtfläche 41 des Ventils 2a ausgefüllt werden muss, insbesondere sind dies der Hauptkanal 13 und alle Bohrungen 34, die an den Hauptkanal 13 angrenzen.

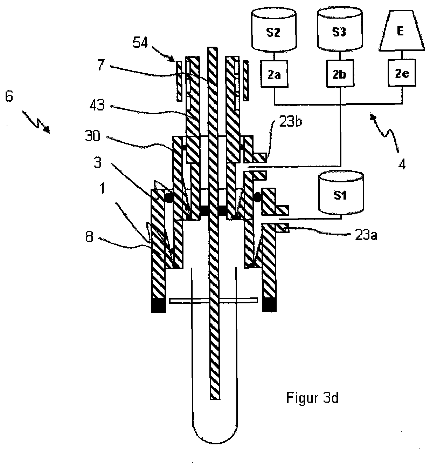

Wie der untere Teil des Steuerelements 30 ist hier auch der untere Teil der Blasdüse 8 wechselbar an den oberen Teil 49 (Träger) der Blasdüse 8 angebracht (Gewinde oder Schnellverschluss). Der obere Teil taucht dabei nicht in den Vorformling ein, sondern nur ein Teil des wechselbaren Segments. Bei auf der Blasform 10a, 10b abdichtenden Blasdüsen 8, z.B. gemäß **Figur 3d****,** ist eine Schnellwechselbarkeit nicht unbedingt erforderlich, weil diese so groß im Durchmesser gewählt werden können, dass alle zu verarbeitenden Vorformlinge V kleiner im Durchmesser sind. Allgemein können auch alle anderen Hülsen 8, 30, 43, 7 auf diese oder ähnliche Art lösbar an einem Träger angebracht sein.

**Figur 3c** zeigt eine alternative Ausführungsform, bei der die Reckstange 7 hohl ist, und die auch in die Ausführung gemäß Figur 3a eingebaut werden könnte. Durch sie kann insbesondere der Boden des Hohlkörpers F in einem weiteren Prozessschritt gekühlt werden. Dieser Schritt kann beispielsweise schon während des Vorblasens stattfinden, aber auch zusätzlich oder alternativ nach dem Fertigblasen. Die entsprechende Aktivierung der einzelnen Ventile 1, 2 hierfür muss hier nicht näher erläutert werden. Die Bohrung der Reckstange kann hierfür entweder an einen Druckspeicher S1, S2, S3, S4 oder an den Auslass E angeschlossen werden, jenachdem, welches Druckniveau während des Kühl- bzw. Spülschritts im Hohlkörper aufrecht erhalten werden soll und in welcher Richtung das kühlende Medium fließen soll. Während des Kühlens wird der oben an der Reckstange 7 anliegende Druckspeicher oder Auslass S1, S2, S3, S4, E mit einem anderen über die Hohlräume 13 und/oder 37 verbunden. Beim Kühlen nach dem Fertigblasen verbleibt die Reckstange 7 eine Zeit lang bevorzugt unten in der Nähe des Bodens des Hohlkörpers F.

Allgemein ist es bei allen Ausführungsformen auch zweckdienlich, die Reckstange 7 immer erst dann hochzuziehen, wenn alle Druckmedium zuführenden Ventile 1, 2 wieder geschlossen sind. So kann der sich im Hohlkörper 7 befindliche Raum um das Volumen der Reckstange 7, welches sich auch im Hohlkörper F befindet, verringert werden.

Zur Reduzierung des Totraums kann das mit der Reckstangenbohrung zusammenwirkende Ventil auch unten an der Reckstange 7 in Form eines von oben ansteuerbaren Stößels angebracht werden (gestrichelt gezeichnet).

Die Reckstange ist bei dieser Ausführungsform Teil der Ventileinheit 5.

**Figur 3d** zeigt eine alternative Ausführungsform, die auch in die Ausführung gemäß Figur 3a mit Abänderungen eingebaut werden könnte. Hier besteht die Schaltungseinheit 6 aus drei rohrartigen Elementen 8, 30, 43. Eine Verbindung zu einem Ventilblock 4 mit den Ventilen 2a, 2b, 2e kann hier einfach durch Schläuche erfolgen, wobei der Schlauch, also der Abstand, von Anschluss 23b zum Ventilblock 4 trotzdem kurz gehalten werden sollte. Wo die jeweiligen Speicher S1 bis S3 bzw. Auslass E angeordnet sind, ist (relativ) frei wählbar. Die Abdichtung des Hohlkörpers V, F erfolgt hier über die nicht gezeigte Blasform 10. Es wäre hier möglich, auch die mittlere Hülse 30 fest anzuordnen und die Hülse 43 und die Blasdüse 8 beweglich auszuführen, um die Ventilfunktion des Kegels gewährleisten zu können. Hierzu müsste die Dichtung 22 der Blasdüse 8 den (sehr kleinen) Ventilhub "mitmachen" bzw. ausgleichen, d.h. immer noch eine Dichtwirkung in der oberen Position gegenüber der Blasform gewährleisten. Es ist aber ebenso denkbar, Hülse 30 und 43 anzutreiben und die Blasdüse 8 während des Formungsprozesses in der abdichtenden Position fest zu belassen. Schemenhaft ist mit Zeichen 54 ein Direktantrieb für die innerste Hülse 43 angedeutet, welcher auch bei den anderen rohrartigen Hülsen 30, 8 Verwendung finden kann. Die Hülste stellt dabei den mit insbesondere Permanentmagneten bestückten Läufer dar. Der Stator ist darum angeordnet. Wenn mehrere Hülsen mit einem Linearantrieb bzw. Direktantrieb ausgestattet werden, wäre es denkbar den selben Stator bzw. mehrere koaxiale Statorsegmente für mehrere Hülsen zu verwenden.

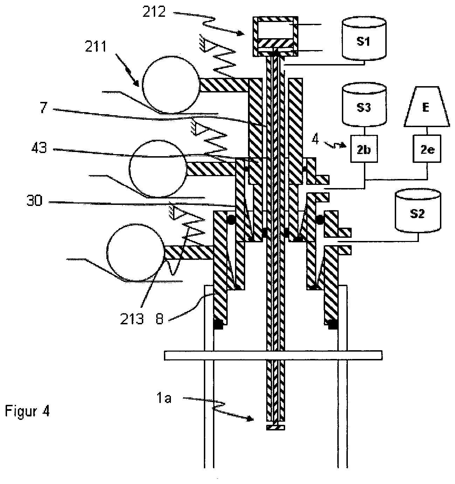

**Figur 4** zeigt eine Ansteuerung der Schaltungseinheit 6 mittels Kurvensteuerungen 211. Die einzelnen Hülsen 43, 30 und 8 werden dabei von Federn 213 ständig auf einer Kurvenbahn gehalten. Für das Heben läuft dabei eine an den Hülsen angebrachte Kurvenrolle entlang eines steigenden Kurvenbahnabschnitts ab. Zu sehen ist hier auch, dass der höchste Druck in Speicher S1 über die Reckstange 7 in den Hohlkörper V, F eingeleitet wird. Die Reckstange 7 ist dazu auch als Hülse ausgebildet. Das Ventil 1 a hierzu befindet sich an der Reckstangenspitze. Angesteuert wird das Ventil 1a über einen Stößel im Inneren der Reckstange, welcher pneumatisch über Einheit 212 betätigt wird. Hierzu sind zwei nicht gezeigte Vorsteuerventile vorgesehen, die auf eine untere und obere Fläche eines in der Einheit 212 angeordneten und mit dem Stößel verbundenen Kolbes wirken. Der Totraum ist hier für das Medium, welches unter dem höchsten Druck in Speicher S1 und/oder zweithöchsten Druck in Speicher S2 steht, extrem gering. Bei Vorformlingen V mit kleinen Mündungsdurchmessern kann eine Abdichtung auch außerhalb des Innenbereichs erfolgen, auf diese Weise wird auch mehr Platz geschaffen, die Hülsen 7, 43, 30 und 8 koaxial zueinander und bereichsweise oder vollständig auf der selben Ebene anzuordnen, welche senkrecht zu der Bewegungsachse steht, in der die Ventilfunktion der rohrartigen Hülsen 7, 43, 30 und 8 ausgeführt wird.

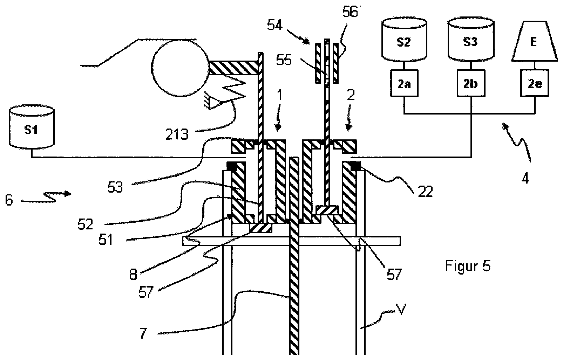

In **Figur 5** sind die Ventile 1 und 2 der Schaltungseinheit 6 innerhalb des Vorformlings V positionierbar und innerhalb der Blasdüse 8 angeordnet bzw. als Teil von dieser ausgeildet. Die Blasdüse 8 dichtet den Vorformling V von oben an dessen Oberkante ab. Die Ventile 1, 2 sind dabei ringförmig um die Reckstange 7 angeordnet und als Kammern 52 ausgebildet, in welchen jeweils ein Ventilstößel 51 parallel zur Längsachse des Vorformlings V durchgeführt wird. Die Kammern 52 weisen nach oben hin jeweils einen Dichtring 53 auf, welche die Stößel 51 abdichten. Die Ventilstößel 51 können über diverse Antriebe verfahren werden - gezeigt ist hier auf der rechten Seite ein tubularer, magnetisch wirkender Linearmotor, wobei dieser als Direktantrieb ausgebildet ist. Der Stator 56 umgibt dabei die als Läufer ausgebildete, mit Permanentmagneten 55 bestückte Stange des Ventilstößels 51. Auf der linken Seite befindet sich ein Kurvenantrieb, bei dem der Stößel 51 von einer Feder 213 zur Abdichtung der Oberkante des Stößelendes 57 nach oben an die Unterkante der Blasdüse 8 bzw. der Kammer 52 gezogen wird. Die Abdichtung kann auch wie rechts gezeigt erfolgen, wobei die Unterkante des Stößelendes 57 an eine ringförmige Dichtfläche im Inneren der Blasdüse 8 bzw. der Kammer gedrückt wird. Die Schaltungseinheit 6 bzw. die Blasdüse 8 ist über einen nicht gezeigten Antrieb in den Vorformling V einführbar. Es wäre aber auch denkbar, den Vorformling von unten in die gezeigte Blasdüse 8 einzuführen und diese stationär auszubilden. Die Leitungen zu den Druckspeichern S können als Schläuche ausgebildet sein.

Alle Ventile der Schaltungseinheit 6 können auch ausschließlich so wie das rechts gezeigte Ventil angesteuert werden und umgekehrt. Die Abdichtung des linken Ventils könnte ebenfalls beim rechten Ventil eingesetzt werden und umgekehrt.

Die Ventile 1, 2, welche die Reckstange 7 umgeben sind in dieser Ausführungsform in einem Teilkreis angeordnet welcher kleiner ist als der des zu blasenden Vorformlings V. Dieser Aspekt stellt für sich genommen auch eine unabhängige Erfindung dar.

Die gezeigten Ausführungsformen für einen Antrieb für Hülsen 7, 43, 30 und 8, Kolben 40, Stößel 51 und die Reckstange 7 sind bei allen Ausführungsformen dieser Anmeldung beliebig untereinander ersetzbar.

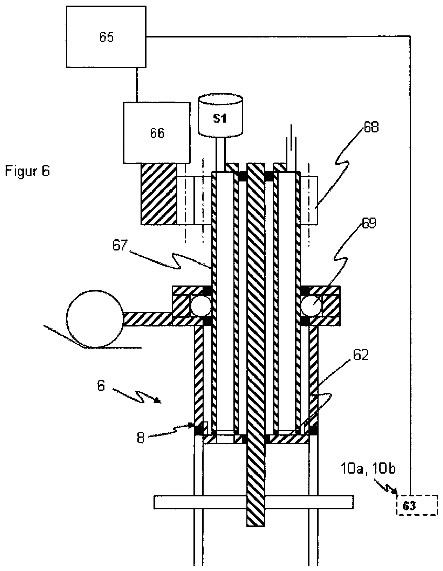

**Figur 6** zeigt eine andere Ausführungsform einer Ventilanordnung. Hier bestehen die Ventile der Schaltungseinheit 6 aus zwei zueinander relativbewegliche Scheiben 62, 67. Die obere Scheibe ist dabei über einen Servomotor 66 und ein Getriebe 68 drehbar und wird durch ein Kugellager 69 gelagert. Jede Scheibe 62, 67 hat mindestens zwei axiale Durchgänge für Druckmedium, wobei die Durchgänge in Umfangsrichtung der Scheiben 62, 67 so angeordnet sind, dass sich nur ein Durchgang der oberen Scheibe 67 und ein Durchgang der unteren Scheibe 62 gleichzeitig überlappen kann. Zur anderen Seite hin sind die Kanäle ähnlich zu Figur 5 mit Schläuchen an die verschiedenen Druckspeicher S angeschlossen, wobei hier die zweiten Ventile und zugehörige Druckspeicher nicht dargestellt sind. In der Blasform 10 befindet sich ein Drucksensor 63, der einen Druckzustand des zu formenden Hohlkörpers aufnimmt und ein daraus generiertes Signal an eine Steuerungseinrichtung 65 weitergibt, welche wiederum die Drehzahl des Servos 66 auf Basis des Signals steuert. Die untere Scheibe 62 ist dabei Teil der Blasdüse 8 und mit ihr verfahrbar. Ebenso wäre es vorstellbar, die obere Scheibe 67 stationär gegenüber dem Vorformling auszubilden und die untere Scheibe 62 zur Ventilöffnung zu drehen. Die Steuerung der Ventile auf Basis eines erfassten Signals ist auch bei den anderen Ausführungsformen möglich, wenn steuer- bzw. regelbare Antriebe für die Ventile 1, 2, 3 verbaut werden.

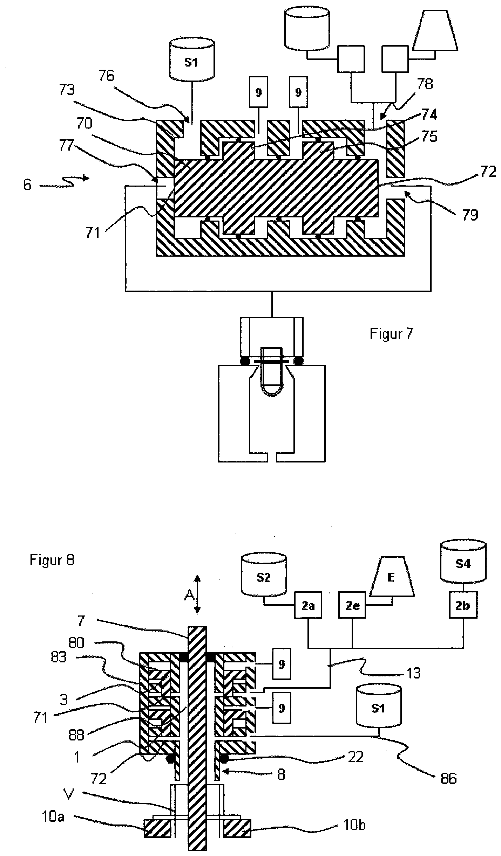

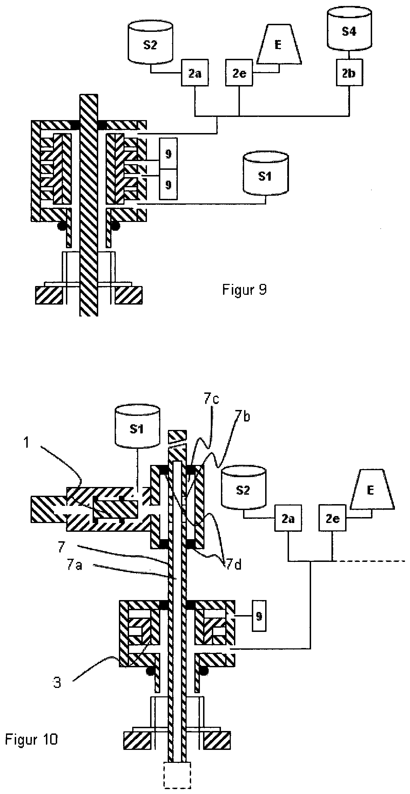

**Figur 7** zeigt ein Doppelsitzventil als Schaltungseinheit 6, welches aus einem Gehäuse 73 und einem Ventilkolben 70 besteht. Der Kolben 70 weist dabei zwei Absätze auf 74 und 75 auf, welche jeweils zu einem Vorsteuerventil 9 hin ringförmige Ansteuerflächen bilden. Jenachdem, welches Vorsteuerventil 9 betätigt wird, bewegt sich der Kolben 70 entweder nach rechts zur Verbindung des Druckspeichers S1 mit dem zu Vorformling V bzw. nach links zur Verbindung der anderen Druckspeicher und Auslässe S und E mit dem Vorformling V. Das nicht betätigte Vorsteuerventil 9 wird insbesondere drucklos geschaltet. Die jeweiligen Flächen 71 und 72 bilden dabei mit dem Gehäuse 73 eine ringförmige Dichtfläche. Es wäre auch denkbar, die Schaltungseinheit 6 dieser Ausführung senkrecht aufzurichten und die Reckstange 7 durch den Kolben 70 zu führen (ähnlich Figur 9). Hier gezeigt ist eine horizontale Bewegung des Kolbens 70, welcher inklusive Gehäuse 73 direkt neben der Reckstange 7 platziert werden kann.

Mit den Bezugszeichen 76 und 77 sind zwei Öffnungen des Ventils dargestellt, wobei die Öffnung 76 ausschließlich als Eingang und die Öffnung 77 als Ausgang fungiert, da die Öffnungen 76, 77 mit dem Druckspeicher S1 mit dem Medium unter dem höchsten Druck verbunden sind. Öffnung 76 stellt mit anderen Worten also nur die Eingangsseite dar. Auf der anderen Seite fungieren die Öffnungen 78, 79 in verschiedenen Betriebszuständen als Eingang und als Ausgang.

In **Figur 8** besteht die Schaltungseinheit 6 aus zwei getrennt voneinander angesteuerten Ventilen 1 und 3 mit rohrförmigen Ventilkolben, welche einen Hauptströmungsweg 88 ringartig umgeben, jedoch in Axialrichtung A zueinander beabstandet sind. Sie werden über Vorsteuerventile 9 angesteuert, welche eine ringartige Fläche an der Kolbenoberseite 80 mit Druckluft beaufschlagen. Die Reckstange ist im Inneren des Hauptströmungswegs 88 in Axialrichtung A verfahrbar. Die von links oben nach rechts unten schraffierten Flächen beziehen sich auf ein Gehäuse 83 welches die Kolben der Ventile 1, 3 lagert und ihnen die ringförmigen Dichtflächen 71, 72 zur Verfügung stellt. Das Gehäuse 83 ist insbesondere mit der Blasdüse 8 fest verbunden. Die Schläuche 13 und 86 verbinden die Druckspeicher S mit den jeweiligen Ventilen 1, 3.

**Figur 9** zeigt die Ausführungsform von **Figur 8****,** nur mit dem Unterschied dass das Ventil 1 und 3 zu einem gemeinsamen Doppelsitzventil mit einem durch zwei Pilotventile betätigbaren Kolben zusammengefasst wurden. Die Wirkungsweise entspricht der von **Figur 7****.**

Bei **Figur 10** wurde im Gegensatz zu der **Figur 8** das Ventil 1 verlegt und an die Reckstange 7 gelegt, in der ein Kanal 7a vorgesehen ist, durch welchen das vom Ventil 1 freigegebene Medium in den Hohlkörper F strömen kann. Die Reckstange weist hierfür Verbindungskanäle 7b auf, welche den inneren Kanal 7a mit einer die Reckstange 7 umgebenden Druckkammer 7c verbinden. Das Ventil 1 und die Druckkammer 7c sind dabei gegenüber dem Höhlkörper stationär angeordnet. Die Reckstange ist entlang der Hohlkörperlängsachse beweglich. Es wäre auch denkbar, das Ventil 1 ohne die Hohlkammer 7c an der Reckstange 7 direkt anzuordnen und mit der Reckstange mitzubewegen.

Eine weitere Möglichkeit wäre, das Ventil nur aus der abgedichteten Hohlkammer 7c und den Verbindungskanälen 7b zu realisieren, wenn eine Beaufschlagung des Hohlkörpers F über die Reckstange 7 in bestimmten Stellungen der Reckstange 7 gegenüber der Kammer 7c erwünscht bzw. möglich ist, nämlich genau dann, wenn sich die Verbindungskanäle 7b innerhalb der zwei Dichtungen 7d der Hohlkammer 7c befinden. Dies kann insbesondere in einer unteren Stellung der Reckstange realisiert werden - wenn sich die Reckstangenspitze in der Nähe des Bodens des Hohlkörpers F befindet. Das Vorblasen kann in dem Fall insbesondere durch die Blasdüse 8 erfolgen. Dieser Aspekt kann für sich genommen auch eine unabhängige Erfindung darstellen.

Die Verbindungskanäle 7b befinden sich insbesondere nur auf einem kleinen Abschnitt der Reckstange 7, insbesondere in einem Teilbereich des oberen Drittels der Reckstange 7.

Die Verbindung vom Ventil 1 zum Druckspeicher S1 kann bei einem stationären Ventil 1 ein Schlauch oder ein festes Rohr sein, bei einem beweglichen Ventil 1 vorzugsweise ein biegbarer Schlauch.

Ventil 3 besteht nur aus einem einzigen Kolben und ist an den zweiten Druckspeicher S2 und den Auslass E angeschlossen ist. Gestrichelt angedeutet ist die optionale Verbindung zu weiteren Druckspeichern bzw. Auslassventilen.

Das Ventil 3 kann wie hier gezeigt fest mit der Blasdüse verbunden sein und mit dieser mitbewegt werden, oder aber im Vergleich zum Hohlkörper feststehend und gegenüber der Blasdüse 8 abgedichtet sein.

Um den Totraum für das Medium in Speicher S1 noch weiter zu reduzieren, könnte das Ventil 1 auch am unteren Ende der Reckstange 7 angebracht sein (gestrichelt dargestellt) - die Funktionsweise könnte analog zur **Figur 4** gestaltet werden.

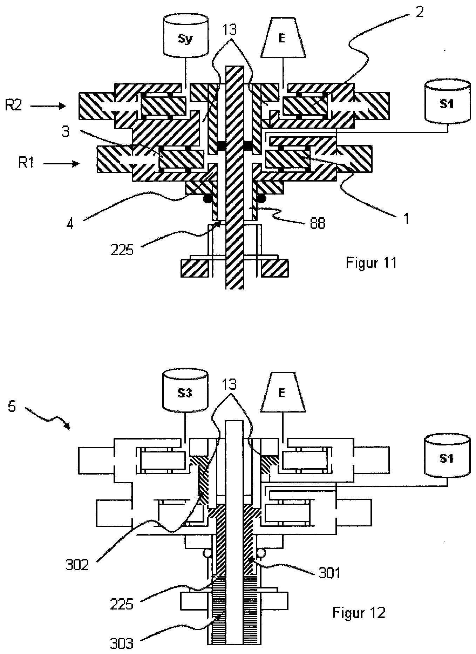

**Figur 11** zeigt eine Ausführungsform, bei der erste und zweite Ventile 1, 2 und das Verbindungsventil 3 in einem gemeinsamen Ventilblock 4 angeordnet sind. Die ersten Ventile 1, 3 sind insbesondere in einer ringförmigen Anordnung R1 um den mittleren Hauptströmungsweg 88 bzw. um die Achse des zu formenden Hohlkörpers V, F angeordnet. Das Verbindungsventil 3 ist insbesondere auch Teil des Rings R1 der ersten Ventile 1 und auf einem Eingang über Kanal 13 mit den zweiten Ventilen 2 verbunden. Die zweiten Ventile sind insbesondere ebenfalls in einer ringförmigen Anordnung R2 um den mittleren Hauptströmungsweg 88 bzw. um die Achse des zu formenden Hohlkörpers V, F angeordnet. Der Ring R2 der zweiten Ventile 2 liegt weiter entfernt vom zu formenden Hohlkörper V, F als der Ring R1. Es können auch noch weitere erste Ventile in Ring R1 und/oder weitere zweite Ventile in Ring R2 vorhanden sein. Die einzelnen Druckspeicher S / bzw. der Auslass E sind über Bohrungen im Ventilblock 4 an die Eingänge / Ausgänge der einzelnen Ventile angeschlossen. Die Reckstange 7 ist insbesondere durch den mittleren Hauptströmungsweg 88 verfahrbar. Der mittlere Hauptströmungsweg ist insbesondere eine Bohrung durch den Ventilblock 4.

**Figur 12** zeigt eine schematische Ausführungsform ähnlich zu der in **Figur 11****.** In dieser Ansicht sind die einzelnen Hohlräume schraffiert dargestellt. Der erste Hohlraum wird dabei von dem Volumen gebildet, welches mit dem Bezugszeichen 301 versehen ist. Bezugszeichen 301, 302 beziehen sich auf den zweiten Hohlraum. Bezugszeichen 301, 302 und 303 beziehen sich auf das Gesamtvolumen. Die Fläche 303 ist in dieser Darstellung nach unten abgeschnitten, soll sich aber bis hin zu den Wandungsgrenzen des Materials V, F ziehen.

Kanal 13 ist in diesem Fall zumindest teilweise ringförmig ausgeprägt, es wäre aber auch möglich, mehrere Kanäle 13 vorzusehen, welche mindestens zwei zweite Ventile mit mindestens zwei Verbindungsventilen 3 verbinden.

Das Bezugszeichen 225 ist auf das Austrittsfenster für das Medium aus der Ventileinheit 5 gerichtet. Das Austrittsfenster 225 bildet die Grenze zwischen dem Volumen 301 und 303 und stellt die Bauraumgrenze der Ventileinheit 5 gegenüber dem zu formenden Hohlkörper V, F dar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Hohlkörperherstellungsmaschine (100) umfassend mindestens eine Form (10), innerhalb derer Hohlkörper (V, F) mittels Beaufschlagung durch ein unter Druck stehendes Medium herstellbar sind, mindestens eine Ventileinheit (5), welche mit der Form (10) derart in Wirkverbindung steht, dass das Medium zu einem sich in der Form (10) befindenden, zu formenden Material (V) von mindestens zwei Ventilen (1, 2) zu-bzw. ableitbar ist, wobei die Ventile (1, 2) jeweils mindestens einen Ausgang in Richtung des zu formenden Materials aufweisen und mindestens einen Eingang in Richtung eines Druckspeichers (S), in dem das unter Druck stehende Medium gespeichert ist, wobei der Ausgang eines ersten Ventils (1) durch einen abdichtbaren ersten Hohlraum (301) und der Ausgang eines zweiten Ventils (2) über einen zweiten abdichtbaren Hohlraum (301, 302) mit dem zu formenden Hohlkörper verbunden ist und wobei der Eingang des ersten Ventils (1) mit einem ersten, unter einem ersten Druck stehenden Druckspeicher (S) verbunden ist und der Eingang des zweiten Ventils (2) mit einem zweiten Druckspeicher (S) verbunden ist, wobei der zweite Druckspeicher (S) unter einem zweiten, geringeren Druck steht als der erste Druckspeicher, **dadurch gekennzeichnet, dass** der erste Hohlraum (301) in zumindest einem Betriebszustand ein geringeres Volumen aufweist als der zweite Hohlraum (301, 302).

2. Hohlkörperherstellungsmaschine nach Anspruch 1, **dadurch gekennzeichnet, dass** der zweite Hohlraum (301, 302) zwischen dem zu formenden Material (V) und dem zweiten Ventil (2) durch das erste Ventil (1) oder ein weiteres Ventil (3) in zumindest einem Betriebszustand trennbar bzw. teilbar ist.

3. Hohlkörperherstellungsmaschine nach Anspruch 1 oder 2, **dadurch gekennzeichnet, dass** der erste Hohlraum (301) in zumindest einem Betriebszustand einen Teil (301) des zweiten Hohlraums (301, 301) bildet.

4. Hohlkörperherstellungsmaschine nach Anspruch 2 und 3, **dadurch gekennzeichnet, dass** der Teil (301) des zweiten Hohlraums (301, 302) durch das erste (1) oder weitere Ventil (3) abdichtbar ist.

5. Hohlkörperherstellungsmaschine nach einem der vorgehenden Ansprüche, **dadurch gekennzeichnet, dass** parallel zum zweiten Ventil (2) ein Ventil (2e) angeordnet ist, wobei dieses Ventil (2e) an einen Auslass E, durch welchen das Medium in die Atmosphäre führbar ist, angeschlossen ist.

6. Hohlkörperherstellungsmaschine nach Anspruch 4 oder 5, **dadurch gekennzeichnet, dass** parallel zum zweiten Ventil (2) ein Ventil (2) angeordnet ist, welches mit einem dritten Druckspeicher (S) verbunden ist, welcher unter einem niedrigeren Druck steht, als der zweite Druckspeicher.

7. Hohlkörperherstellungsmaschine nach einem der vorgehenden Ansprüche, **dadurch gekennzeichnet, dass** das erste Ventil (1) örtlich näher an der Form (10) angeordnet ist als das zweite Ventil (2).

8. Hohlkörperherstellungsmaschine nach einem der vorgehenden Ansprüche, **dadurch gekennzeichnet, dass** das erste Ventil (1) ein Sitzventil mit einem beweglichen Kolben ist, welcher auf einer Seite eine mit einem Ventilsitz zusammenwirkende Dichtfläche aufweist, mit welcher ein Strömen von Medium von einem Druckspeicher (S) in das zu formende Material (V, F) in mindestens einem Betriebszustand unterbrochen wird und welcher eine der Dichtfläche gegenüberliegende Steuerfläche aufweist, über welche mittels Beaufschlagung durch einen Steuerdruck der Kolben bewegbar ist.

9. Hohlkörperherstellungsmaschine nach einem der vorgehenden Ansprüche, **dadurch gekennzeichnet, dass** die Hohlräume (301, 302) gegenüber der Form (10) mittels einer Blasdüse (8) abgedichtet werden und dabei die Dichtung (22) der Blasdüse (8) auf einer Oberfläche der Form (10) aufliegt.

10. Hohlkörperherstellungsmaschine nach einem der Ansprüche 1 bis 8, **dadurch gekennzeichnet, dass** das erste Ventil (1), oder das erste (1) und das weitere Ventil (3), zumindest bereichsweise in einen Bereich einfahrbar ist, der von dem zu verformenden Material (V) vor einem Blasprozess umgeben wird und eine Abdichtung über die Blasdüse (8) in dem Bereich von innen oder an dessen Kante zu einem äußeren Bereich mittels der Dichtung (22) stattfindet.

11. Hohlkörperherstellungsmaschine nach einem der vorgehenden Ansprüche, **dadurch gekennzeichnet, dass** ein Ventilkolben (70) des ersten (1) und/oder des weiteren Ventils (3) zumindest einen Teil eines mit Medium durchflossenen Hohlraums (301) ringartig umgibt.

12. Hohlkörperherstellungsmaschine nach einem der vorgehenden Ansprüche, **dadurch gekennzeichnet, dass** das erste (1) und das weitere Ventil (3) jeweils einen rohrförmigen Kolben bzw. eine Hülse (7, 8, 30, 43) aufweisen und einer der Kolben den anderen zumindest bereichsweise ringartig umgibt.

13. Hohlkörperherstellungsmaschine nach Anspruch 12, **dadurch gekennzeichnet, dass** die Hülse (7, 8, 30, 43) des ersten (1) und/oder des weiteren Ventils (1a, 1b, 3) lösbar an einem jeweiligen Träger (30, 49) angeordnet sind.

14. Hohlkörperherstellungsmaschine nach einem der vorgehenden Ansprüche, **dadurch gekennzeichnet, dass** das erste (1) oder das weitere Ventil (1 a, 1 b, 3) einen Teil der Blasdüse (8) bilden bzw. fest mit dieser verbunden sind und dass ein Antrieb (21, 211) der Blasdüse sowohl einen Hub zum Abdichten der zu verformenden Masse (V) als auch einen Hub zur Steuerung einer Ventilfunktion bereitstellt.

15. Hohlkörperherstellungsmaschine nach einem der vorgehenden Ansprüche, **dadurch gekennzeichnet, dass** mindestens eine Hülse (7, 8, 30, 43) einen Vorsprung (35) aufweist, welcher als Dichtfläche mit einer anderen Hülse (7, 8, 30, 43) zusammenwirkt.

16. Hohlkörperherstellungsmaschine nach einem der vorgehenden Ansprüche, **dadurch gekennzeichnet, dass** zwei Strömungswege für das Medium in den Bereich des Hohlkörpers (F) bereitgestellt werden, wobei ein Strömungsweg im Bereich einer Mündung des Hohlkörpers (F) endet und von der Blasdüse (8) gebildet wird und ein weiterer Strömungsweg in der Nähe des der Mündung des Hohlkörpers (F) gegenüberliegenden Endes endet und durch eine in den Hohlkörper (F) einfahrbare Stange (7) bereitgestellt wird.

17. Hohlkörperherstellungsmaschine nach einem der vorgehenden Ansprüche, **dadurch gekennzeichnet, dass** an den ersten Hohlraum höchstens drei Ventile (1, 1a, 3), insbesondere nur zwei Ventile (1, 1 a, 3) angrenzen.

18. Hohlkörperherstellungsmaschine nach einem der vorgehenden Ansprüche, **dadurch gekennzeichnet, dass** das Volumen des Bereichs des ersten Hohlraums (301), welches sich zwischen dem ersten Ventil (1) und einem Austrittsfenster (225) aus der Ventileinheit (5) befindet mindestens 1,2 mal, insbesondere mindestens 1,5 mal, so groß ist wie das Volumen des Bereichs des zweiten Hohlraums (301, 302), welches sich zwischen dem zweiten Ventil (2) und einem Austrittsfenster (225) aus der Ventileinheit (5) befindet.

19. Hohlkörperherstellungsmaschine nach einem der vorgehenden Ansprüche, **dadurch gekennzeichnet, dass** es sich bei der Hohlkörperherstellungsmaschine (100) um eine, insbesondere rundlaufende und kontinuierlich arbeitende, Streckblasmaschine handelt, an der eine Vielzahl von Blasstationen (Bs) angeordnet sind und in die temperierte, reagenzglasförmige Vorformlinge (V) aus Kunststoff, insbesondere PET, eingegeben und in den Blasstationen (Bs) zu Hohlkörpern (F) umgeformt werden.

20. Verfahren zum Umformen eines Materials (V) in einen Hohlkörper (F) mittels unter Druck stehendem Medium, umfassend folgende Schritte, insbesondere der Reihenfolge nach:
a) Einbringen eines zu verformenden Materials (V) in eine Form (10)
b) Öffnen eines zweiten Ventils (2) und Leiten eines unter einem zweiten Druck stehenden Mediums von einem zweiten Druckspeicher (S) zu dem zu verformenden Material (V)
c) Auffüllen eines zweiten Hohlraums (301, 302) mit dem Medium aus dem zweiten Druckspeicher, welcher sich zwischen dem zu verformenden Material (V) und dem zweiten Ventil (2) befindet
d) Absperren der Verbindung vom zweiten Druckspeicher (S) zu dem zu verformenden Material (V) durch das zweite Ventil (2)
e) Öffnen eines ersten Ventils (1) und Leiten eines unter einem ersten Druck stehenden Mediums von einem ersten Druckspeicher (S) zu dem zu verformenden Material, wobei der erste Druck größer ist als der zweite
f) Auffüllen eines ersten Hohlraums (301) mit dem Medium aus dem ersten Druckspeicher, welcher sich zwischen dem zu verformenden Material und dem ersten Ventil (1) befindet
**dadurch gekennzeichnet, dass** der erste Hohlraum (301) im Schritt f) ein geringeres Volumen aufweist als der zweite Hohlraum (301, 302) im Schritt c).

21. Verfahren nach Anspruch 20, **dadurch gekennzeichnet, dass** bei Schritt c) ein weiteres Ventil (3) geöffnet ist, welches sich zwischen dem zweiten Ventil (2) und dem zu verformenden Material (V) befindet und welches in Schritt d) oder zwischen Schritt d) und e) geschlossen wird, so dass ein Teil (302) des zweiten Hohlraums (301, 302) nicht mit dem Medium aus dem ersten Druckspeicher (S) im Schritt f) ausgefüllt wird (Schritt i).

22. Verfahren nach Anspruch 21, **dadurch gekennzeichnet, dass** im Schritt c) auch der erste Hohlraum (301) vollständig befüllt wird.

23. Verfahren nach einem der Ansprüche 20 bis 22, **gekennzeichnet durch** folgenden Schritt: Öffnen eines mit einem dritten Druckspeicher (S) verbundenen Ventils (1, 2) und Leiten eines unter einem dritten Druck stehenden Mediums von dem dritten Druckspeicher (S) zu dem zu verformenden Material (V), wobei der dritte Druck kleiner ist als der zweite Druck, Ausfüllen des zweiten Hohlraums (301, 302) mit dem dritten Medium, wobei der zweite Hohlraum (301, 302) sowohl an das zweite Ventil (2), das mit dem dritten Druckspeicher verbundene Ventil (1, 2) und das zu verformende Material angrenzt (Schritt ii), wobei Schritt ii) nach dem Schritt a) und vor dem Schritt b) durchgeführt wird.

24. Verfahren nach einem der Ansprüche 20 bis 23, **gekennzeichnet durch** folgenden Schritt: Öffnen des zweiten (2) oder des dem dritten Druckspeicher verbundene Ventils (2) oder eines mit einem vierten Druckspeicher (S) verbundenen Ventils (2) und Ableiten des Mediums aus dem Hohlkörper (F) heraus in einen Druckspeicher (S) (Schritt iv), wobei dieser Schritt iv) nach dem Schritt f) durchgeführt wird.

25. Verfahren nach einem der Ansprüche 20 bis 24, **gekennzeichnet durch** folgenden Schritt: Öffnen eines Auslassventils (2e) und Ableiten des Mediums aus dem Hohlkörper (F) heraus in die Atmosphäre (Schritt v) nach dem Schritt f), insbesondere nach dem Schritt iv).

26. Hohlkörperherstellungsmaschine (100) umfassend mindestens eine Vorrichtung zur Temperierung (150) von hohlkörperartigen Vorformlingen (V) aus Kunststoff mit lediglich einer Mündungsöffnung, eine Einheit zur Übergabe (130) der temperierten Vorformlinge (V) an eine Blasstation (BS), in der die Vorformlinge (V) mittels Beaufschlagung durch ein Medium gegen die Wände einer Blasform (10) expandiert werden, wobei mindestens zwei Druckspeicher (S) mit einer an der Blasstation (Bs) angeordneten Ventileinheit (5) in Verbindung stehen und wobei die Ventileinheit (5) mindestens drei Ventile (1, 2) umfasst, wobei durch ein zweites Ventil (2) der Ventileinheit (5) ein Medium aus dem zweiten Druckspeicher (S) dem Vorformling (V) zugeführt wird und durch ein erstes Ventil (1) ein erstes Medium aus dem ersten Druckspeicher (S), wobei das Medium im ersten Druckspeicher (S) einen höheren Druck aufweist als das Medium im zweiten Druckspeicher (S), und einem dritten an der Ventileinheit (5) angeordneten Ventil (2), durch welches Medium aus dem expandierten Hohlkörper (F) gegen die Atmosphäre ableitbar ist, und mit einer an der Blasstation (Bs) angeordneten Reckstange (7) zur Dehnung eines Vorformlings (V) entlang dessen Längsachse während des Blasvorgangs, **dadurch gekennzeichnet, dass** das erste Ventil (1) mittels einer Relativbewegung zwischen Ventil (1) und Vorformling (V) in den Mündungsbereich des Vorformlings (V) über einen Antrieb (21, 31) einfahrbar ist und sich der Ausgang (77) des ersten Ventils (1) während der Zuführung des Mediums aus dem ersten Druckspeicher (S) innerhalb des Vorformlings (V) bzw. Hohlkörpers (F) befindet und der Vorformling (V) bzw. Hohlkörper (F) während der Zuführung von Medium aus dem ersten Druckspeicher (S) von einer Dichtung (22) an einer Vorformling- bzw. Hohlkörpermündungskante oder an einer Innenfläche des Vorformlings (V) bzw. Hohlkörpers (F) abgedichtet wird, so dass sich das Medium nach Verlassen des ersten Ventils (1) und während der Öffnungszeit des ersten Ventils (1) ausschließlich im Innenbereich (303) des Vorformlings (V) bzw. Hohlkörpers (F) befindet, wobei der Innenbereich (303) durch die Vorformling- bzw. Hohlkörpermündungskante abgegrenzt wird, und wobei die Reckstange (7) bei der Längsdehnung des Vorformlings (V) bereichsweise an mindestens einem sich im Innenbereich (303) befindenden Ventil (1, 2) vorbei- oder hindurchgefahren wird.

## Claims

1. Machine for making hollow articles (100) comprising at least one mould (10), inside which hollow articles (V, F) may be made by means of applying a medium under pressure, at least one valve unit (5), which is operatively connected with the mould (10) in such a way that the medium may be conducted to or from a material to be moulded (V) in the mould (10) by at least two valves (1, 2), in which the valves (1, 2) each have at least one outlet in the direction of the material to be moulded and at least one inlet in the direction of a pressure accumulator (S), in which the medium under pressure is stored, in which the outlet of a first valve (1) is connected with the hollow article to be moulded through a first cavity that may be sealed (301) and the outlet of a second valve (2) through a second cavity that may be sealed (301, 302) and in which the inlet of the first valve (1) is connected with a first pressure accumulator under a first pressure (S) and the inlet of the second valve (2) is connected with a second pressure accumulator (S), in which the second pressure accumulator (S) is under a second, smaller pressure than the first pressure accumulator, **characterised in that** the first cavity (301) has a smaller volume than the second cavity (301, 302) in at least one operating state.

2. Machine for making hollow articles according to claim 1, **characterised in that** the second cavity (301, 302) between the material to be moulded (V) and the second valve (2) may be separated or divided by the first valve (1) or a further valve (3) in at least one operating state.

3. Machine for making hollow articles according to claim 1 or 2, **characterised in that** the first cavity (301) forms a part (301) of the second cavity (301, 301) in at least one operating state.

4. Machine for making hollow articles according to claim 2 and 3, **characterised in that** the part (301) of the second cavity (301, 302) may be sealed by the first (1) or further valve (3).

5. Machine for making hollow articles according to one of the previous claims,
**characterised in that** a valve (2e) is arranged parallel to the second valve (2), in which this valve (2e) is connected to an outlet E, through which the medium may be conducted into the atmosphere.

6. Machine for making hollow articles according to claim 4 or 5, **characterised in that** a valve (2) is arranged parallel to the second valve (2), which is connected with a third pressure accumulator (S), which is under a lower pressure than the second pressure accumulator.

7. Machine for making hollow articles according to one of the previous claims, **characterised in that** the first valve (1) is arranged locally closer to the mould (10) than the second valve (2).

8. Machine for making hollow articles according to one of the previous claims, **characterised in that** the first valve (1) is a seat valve with a moveable piston, which on one side has a sealing surface working together with a valve seat, with which a flow of medium from a pressure accumulator (S) into the material to be moulded (V, F) is interrupted in at least one operating state and which has a control surface lying opposite the sealing surface, through which the piston may be moved by means of applying a control pressure.

9. Machine for making hollow articles according to one of the previous claims, **characterised in that** the cavities (301, 302) are sealed with regard to the mould (10) by means of a blast nozzle (8) and in this the seal (22) of the blast nozzle (8) lies on a surface of the mould (10).

10. Machine for making hollow articles according to one of claims 1 to 8, **characterised in that** at least in areas the first valve (1) or the first (1) and the further valve (3) may be introduced into an area, which is surrounded by the material to be moulded (V) before a blow moulding process and sealing takes place through the blast nozzle (8) in the area from inside or at its edge to an outer area by means of the seal (22).

11. Machine for making hollow articles according to one of the previous claims,
**characterised in that** a valve piston (70) of the first (1) and/or the further valve (3) surrounds at least a part of a cavity that the medium flows through (301) like a ring.

12. Machine for making hollow articles according to one of the previous claims, **characterised in that** the first (1) and the further valve (3) each have a tubular piston or a sleeve (7, 8, 30, 43) and at least in areas one of the pistons surrounds the other like a ring.

13. Machine for making hollow articles according to 12, **characterised in that** the sleeve (7, 8, 30, 43) of the first (1) and/or the further valve (1 a, 1 b, 3) are arranged on a support (30, 49) so that they may be detached.

14. Machine for making hollow articles according to one of the previous claims, **characterised in that** the first (1) or the further valve (1 a, 1 b, 3) form a part of the blast nozzle (8) or are connected firmly with it and that a drive (21, 211) of the blast nozzle provides both a stroke for sealing the mass to be moulded (V) as well as a stroke for controlling a valve function.

15. Machine for making hollow articles according to one of the previous claims, **characterised in that** at least one sleeve (7, 8, 30, 43) has a projection (35), which works together with another sleeve (7, 8, 30, 43) as a sealing surface.

16. Machine for making hollow articles according to one of the previous claims, **characterised in that** two flow paths for the medium are provided in the area of the hollow article (F), in which one flow path ends in the area of an opening of the hollow article (F) and is formed by the blast nozzle (8) and a further flow path ends near the end lying opposite the opening of the hollow article (F) and is provided by a rod (7) that may be introduced into the hollow article (F).

17. Machine for making hollow articles according to one of the previous claims, **characterised in that** at most three valves (1,1 a, 3), particularly only two valves (1, 1 a, 3) adjoin the first cavity.

18. Machine for making hollow articles according to one of the previous claims,
**characterised in that** the volume of the area of the first cavity (301), which is between the first valve (1) and an outlet window (225) from the valve unit (5), is at least 1.2 times, particularly at least 1.5 times as big as the volume of the area of the second cavity (301, 302), which is between the second valve (2) and an outlet window (225) from the valve unit (5).

19. Machine for making hollow articles according to one of the previous claims, **characterised in that** the machine for making hollow articles (100) is a rotating and continuously working stretch blow moulding machine in particular, on which a large number of blow moulding stations (Bs) are arranged and into which tempered preforms like test tubes (V) made of plastic, particularly PET, are introduced and moulded into hollow articles (F) in the blow moulding stations (Bs).

20. Method for blow moulding a material (V) into a hollow article (F) by means of a medium under pressure, comprising the following steps, particularly according to the sequence:
a) introducing a material to be moulded (V) into a mould (10)
b) opening a second valve (2) and conducting a medium under a second pressure from a second pressure accumulator (S) to the material to be moulded (V)
c) filling a second cavity (301, 302) with the medium from the second pressure accumulator, which is between the material to be moulded (V) and the second valve (2)
d) shutting off the connection from the second pressure accumulator (S) to the material to be moulded (V) through the second valve (2)
e) opening a first valve (1) and conducting a first medium under a first pressure from a first pressure accumulator (S) to the material to be moulded, in which the first pressure is greater than the second
f) filling a first cavity (301) with the medium from the first pressure accumulator, which is between the material to be moulded and the first valve (1) **characterised in that** the first cavity (301) in step f) has a smaller volume than the second cavity (301, 302) in step c).

21. Method according to claim 20, **characterised in that** in step c) a further valve (3) is opened, which is between the second valve (2) and the material to be moulded (V) and which is closed in step d) or between step d) and e), so that a part (302) of the second cavity (301, 302) is not filled with the medium from the first pressure accumulator (S) in step f) (step i).

22. Method according to claim 21, **characterised in that** in step c) the first cavity (301) is also completely filled.

23. Method according to one of claims 20 to 22, **characterised by** the following step:
opening a valve (1, 2) connected with a third pressure accumulator (S) and
conducting a medium under a third pressure from the third pressure accumulator (S) to the material to be moulded (V), in which the third pressure is smaller than the second pressure, filling the second cavity (301, 302) with the third medium, in which the second cavity (301, 302) adjoins both the second valve (2), the valve (1, 2) connected with the third pressure accumulator and the material to be moulded (step ii), in which step ii) is carried out after step a) and before step b).

24. Method according to one of claims 20 to 23, **characterised by** the following step:
opening the second valve (2) or the valve (2) connected to the third pressure accumulator or a valve (2) connected with a fourth pressure accumulator (S) and
conducting the medium from the hollow article (F) into a pressure accumulator (S) (step iv), in which this step iv) is carried out after step f).

25. Method according to one of claims 20 to 24, **characterised by** the following step:
opening an outlet valve (2e) and conducting the medium from the hollow article (F) into the atmosphere (step v) after step f), particularly after step iv).

26. Machine for making hollow articles (100) comprising at least one device for tempering (150) preforms like hollow articles (V) made of plastic with only one opening, a unit for transferring (130) the tempered preforms (V) to a blow moulding station (BS), in which the preforms (V) are expanded by means of applying a medium to the walls of a blow mould (10), in which at least two pressure accumulators (S) are connected with a valve unit (5) arranged on the blow moulding station (Bs) and in which the valve unit (5) comprises at least three valves (1, 2), in which a medium is conducted from the second pressure accumulator (S) to the preform (V) through a second valve (2) of the valve unit (5) and a first medium from the first pressure accumulator (S) through a first valve (1), in which the medium in the first pressure accumulator (S) has a higher pressure than the medium in the second pressure accumulator (S), and a third valve (2) arranged on the valve unit (5), through which the medium from the expanded hollow article (F) may be conducted to the atmosphere, and with a horizontal bar (7) arranged on the blow moulding station (Bs) for extending a preform (V) along its longitudinal axis during the blow moulding process, **characterised in that** the first valve (1) may be introduced into the area of the opening of the preform (V) through a drive (21, 31) by means of a relative movement between valve (1) and preform (V) and the outlet (77) of the first valve (1) is inside the preform (V) or hollow article (F) whilst the medium is conducted from the first pressure accumulator (S) and the preform (V) or hollow article (F) is sealed by a seal (22) on an edge of the opening of the preform or hollow article or on an inner surface of the preform (V) or hollow article (F) whilst the medium is conducted from the first pressure accumulator (S), so that the medium is exclusively in the inner area (303) of the preform (V) or hollow article (F) after leaving the first valve (1) and during the opening time of the first valve (1), in which the inner area (303) is delimited by the edge of the opening of the preform or hollow article and in which in areas the horizontal bar (7) is moved past or through at least one valve (1, 2) in the inner area (303) on longitudinal extension of the preform (V).

## Revendications

1. Machine de fabrication de corps creux (100) comprenant au moins un moule (10) dans lequel peuvent être fabriqués des corps creux (V, F) suite à l'injection d'un agent sous pression, au moins une unité de soupapes (5) qui est en liaison fonctionnelle avec le moule (10) de sorte que le fluide puisse être transféré vers un matériau (V) à mouler situé dans le moule (10) ou évacué de celui-ci par au moins deux soupapes (1, 2), les soupapes (1, 2) comportant chacune au moins une sortie en direction du matériau à mouler et au moins une entrée en direction d'un accumulateur de pression (S) dans lequel est accumulé le fluide sous pression, la sortie d'une première soupape (1) étant reliée au corps creux à mouler par une première cavité (301) pouvant être rendue étanche et la sortie d'une seconde soupape (2) étant reliée au corps creux à mouler par une seconde cavité (301, 302) pouvant être rendue étanche, et l'entrée de la première soupape (1) étant reliée à un premier accumulateur de pression (S) se trouvant sous une première pression et l'entrée de la seconde soupape (2) étant reliée à un second accumulateur de pression (S), le second accumulateur de pression (S) se trouvant sous une seconde pression plus faible que celle du premier accumulateur de pression,
**caractérisée en ce que**
la première cavité (301) a dans au moins un état de fonctionnement, un volume inférieur à celui de la seconde cavité (301, 302).

2. Machine de fabrication de corps creux conforme à la revendication 1,
**caractérisée en ce que**
la seconde cavité (301, 302) situées entre le matériau (V) à mouler et la seconde soupape (2), peut être séparée ou subdivisée par la première soupape (1) ou une autre soupape (3) dans au moins un état de fonctionnement.

3. Machine de fabrication de corps creux conforme à la revendication 1 ou 2,
**caractérisée en ce que**
dans au moins un état de fonctionnement, la première cavité (301) forme une partie (301) de la seconde cavité (301, 301).

4. Machine de fabrication de corps creux conforme aux revendications 2 et 3,
**caractérisée en ce que**
la partie (301) de la seconde cavité (301, 302) peut être rendue étanche par la première soupape (1) ou une autre soupape (3).

5. Machine de fabrication de corps creux conforme à l'une des revendications précédentes,
**caractérisée en ce qu'**
une soupape (2e) est montée parallèlement à la seconde soupape (2), cette soupape (2e) étant connectée à une sortie E par laquelle le fluide peut être transféré dans l'atmosphère.

6. Machine de fabrication de corps creux conforme à la revendication 4 ou 5,
**caractérisée en ce qu'**
en parallèle sur la seconde soupape (2) est montée une soupape (2) qui est reliée à un troisième accumulateur de pression (S) qui se trouve sous une pression plus faible que celle du second accumulateur de pression.

7. Machine de fabrication de corps creux conforme à l'une des revendications précédentes,
**caractérisée en ce que**
la première soupape (1) est plus proche du moule (10) que la seconde soupape (2).

8. Machine de fabrication de corps creux conforme à l'une des revendications précédentes,
**caractérisée en ce que**
la première soupape (1) est une soupape à siège équipée d'un piston mobile qui comporte sur un côté une surface d'étanchéité coopérant avec un siège de soupape par laquelle la circulation du fluide d'un accumulateur de pression (S) dans le matériau (V, F) à mouler est interrompue dans au moins un état de fonctionnement, et qui a une surface de commande opposée à la surface d'étanchéité par l'intermédiaire de laquelle le piston peut être déplacé sous l'action d'une pression de commande.

9. Machine de fabrication de corps creux conforme à l'une des revendications précédentes,
**caractérisée en ce que**
les cavités (301, 302) sont rendues étanches par rapport au moule (10) au moyen d'une buse de soufflage (8), et le joint d'étanchéité (22) de la buse de soufflage (8) s'applique sur une surface du moule (10).

10. Machine de fabrication de corps creux conforme à l'une des revendications 1 à 8,
**caractérisée en ce que**
la première soupape (1) ou la première soupape (1) et l'autre soupape (3) peuvent être insérées au moins par zones dans une zone qui est entourée par le matériau (V) à déformer avant un processus de soufflage, et une étanchéité est obtenue par l'intermédiaire de la buse de soufflage (8) dans la zone allant de sa partie interne ou de son bord à sa partie externe au moyen du joint d'étanchéité (22).

11. Machine de fabrication de corps creux conforme à l'une des revendications précédentes,
**caractérisée en ce que**
le piston de soupape (70) de la première soupape (1) et/ou de l'autre soupape (3) entoure à la manière d'une bague au moins une partie d'une cavité (301) dans laquelle circule le fluide.

12. Machine de fabrication de corps creux conforme à l'une des revendications précédentes,
**caractérisée en ce que**
la première soupape (1) et l'autre soupape (3) comprennent chacune un piston tubulaire ou une douille (7, 8, 30, 43) et l'un des pistons entoure l'autre piston au moins par segments à la manière d'une bague.

13. Machine de fabrication de corps creux conforme à la revendication 12,
**caractérisée en ce que**
la douille (7, 8, 30, 43) de la première soupape (1) et/ou de l'autre soupape (1a, 1b, 3) est(sont) montée(s) de façon amovible sur un support respectif (30, 49).

14. Machine de fabrication de corps creux conforme à l'une des revendications précédentes,
**caractérisée en ce que**
la première soupape (1) ou l'autre soupape (1a, 1b, 3) forme une partie de la buse de soufflage (8) ou est reliée solidairement à celle-ci, et un entraînement (21, 211) de la buse de soufflage permet d'obtenir une course permettant de rendre étanche la masse (V) à déformer et également une course de commande d'une fonction de soupape.

15. Machine de fabrication de corps creux conforme à l'une des revendications précédentes,
**caractérisée en ce qu'**
au moins une douille (7, 8, 30, 43) comporte une saillie (35) qui coopère en formant une surface d'étanchéité avec une autre douille (7, 8, 30, 43).

16. Machine de fabrication de corps creux conforme à l'une des revendications précédentes,
**caractérisée en ce que**
deux trajets de circulation du fluide sont prévus dans la zone du corps creux (F), l'un de ces trajets de circulation se terminant dans la zone d'un orifice du corps creux (F) et étant formé par la buse de soufflage (8), et l'autre trajet de circulation se terminant à proximité de l'extrémité située à l'opposé de l'orifice du corps creux (F) et étant obtenu par l'intermédiaire d'une tige (7) pouvant être insérée dans le corps creux (F).

17. Machine de fabrication de corps creux conforme à l'une des revendications précédentes,
**caractérisée en ce qu'**
au plus trois soupapes (1, 1a, 3) en particulier seulement deux soupapes (1, 1a, 3) sont adjacentes à la première cavité.

18. Machine de fabrication de corps creux conforme à l'une des revendications précédentes,
**caractérisée en ce que**
le volume de la zone de la première cavité (301) qui est située entre la première soupape (1) et une fenêtre de sortie (225) de l'unité de soupape (5) est au moins 1,2 fois, et en particulier au moins 1,5 fois égal au volume de la zone de la seconde cavité (301, 302) qui est située entre la seconde soupape (2) et la fenêtre de sortie (225) de l'unité de soupape (5).

19. Machine de fabrication de corps creux conforme à l'une des revendications précédentes,
**caractérisée en ce qu'**
elle est constituée par une machine d'expansion et de soufflage en particulier rotative et travaillant en continu sur laquelle est montée une série de postes de soufflage (Bs) et dans laquelle des ébauches (V) en matériau synthétique, en particulier en PET, équilibrées en température en forme d'éprouvettes, sont introduites et mises en forme pour obtenir des corps creux (F) au niveau des postes de soufflage (Bs).

20. Procédé de mise en forme d'un matériau (V) pour obtenir un corps creux (F) au moyen d'un fluide sous pression comprenant les étapes suivantes en particulier la succession des étapes suivantes consistant à :
a) introduire un matériau (V) à déformer dans un moule (10),
b) ouvrir une seconde soupape (2) et transférer un fluide se trouvant sous une seconde pression d'un second accumulateur de pression (S) vers le matériau (V) à déformer,
c) remplir avec le fluide provenant du second accumulateur de pression une seconde cavité (301, 302) située entre le matériau (V) à déformer et la seconde soupape (2),
d) bloquer la liaison entre le second accumulateur de pression (S) et le matériau (V) à déformer au moyen de la seconde soupape (2),
e) ouvrir une première soupape (1) et transférer un fluide se trouvant sous une première pression entre un premier accumulateur de pression (S) et le matériau à déformer, la première pression étant supérieure à la seconde pression,
f) remplir avec le fluide provenant du premier accumulateur de pression une première cavité (301) située entre le matériau à déformer et la première soupape (1),
**caractérisé en ce que**
dans l'étape f) la première cavité (301) a un volume plus faible que la seconde cavité (301, 302) dans l'étape c).

21. Procédé conforme à la revendication 20,
**caractérisé en ce que**,
lors de l'étape c) est ouverte une autre soupape (3) qui est située entre la seconde soupape (2) et le matériau (V) à déformer et qui est fermée pendant l'étape d) ou entre les étapes d) et e) de sorte qu'une partie (302) de la seconde cavité (301, 302) ne soit pas remplie avec le fluide provenant de l'accumulateur de pression (S) lors de l'étape f) (étape i).

22. Procédé conforme à la revendication 21,
**caractérisé en ce que**,
lors de l'étape c) la première cavité (301) est également totalement remplie.

23. Procédé conforme à l'une des revendications 20 à 22,
**caractérisé par**, les étapes suivantes consistant à : ouvrir une soupape (1, 2) reliée à un troisième accumulateur de pression (S) et transférer un fluide se trouvant sous une troisième pression du troisième accumulateur de pression (S) au matériau (V) à déformer, la troisième pression étant inférieure à la seconde pression, remplir la seconde cavité (301, 302) avec le troisième fluide, la seconde cavité (301, 302) étant adjacente à la seconde soupape (2), à la soupape (1, 2) reliée au troisième accumulateur de pression et au matériau à déformer (étape ii), l'étape ii) étant mise en oeuvre après l'étape a) et avant l'étape b).

24. Procédé conforme à l'une des revendications 20 à 23,
**caractérisé par** les étapes suivantes consistant à : ouvrir la seconde soupape (2) ou la soupape (2) reliée au troisième accumulateur de pression ou une soupape (2) reliée à un quatrième accumulateur de pression (S) et évacuer le fluide du corps creux (F) dans un accumulateur de pression (S) (étape iv), cette étape iv) étant mise en ouvre après étape f).

25. Procédé conforme à l'une des revendications 20 à 24,
**caractérisé par** les étapes suivantes consistant à : ouvrir une soupape d'échappement (2e) et évacuer le fluide du corps creux (F) dans l'atmosphère (étape v) après l'étape f), en particulier après l'étape iv).

26. Machine de fabrication de corps creux (100) comprenant au moins un dispositif d'équilibrage en température (150) d'ébauches de corps creux (5) en matériau synthétique ayant un seul orifice d'embouchure, une unité de transfert (130) d'ébauches (V) équilibrées en température vers un poste de soufflage (BS) dans lequel les ébauches (V) sont expansées contre les parois d'un moule de soufflage (10) sous l'action d'un fluide, au moins deux accumulateurs de pression (S) étant en liaison avec une unité de soupapes (5) montée sur le poste de soufflage (Bs), et l'unité de soupapes (5) comprenant au moins trois soupapes (1, 2) par une seconde soupape (2) de l'unité de soupapes (5) un fluide étant transféré du second accumulateur de pression (S) vers l'ébauche (V), et par une première soupape (1) un premier fluide étant transféré du premier accumulateur de pression (S), vers l'ébauche (V), le fluide renfermé dans le premier accumulateur de pression (S) ayant une pression supérieure à celle du fluide renfermé dans le second accumulateur de pression (S), et une troisième soupape (2) montée sur l'unité de soupapes (5) permettant d'évacuer le fluide du corps creux expansé (F) vers l'atmosphère, ainsi qu'une tige d'étirage (7) montée sur le poste de soufflage (Bs) pour permettre d'étirer une ébauche (V) le long de son axe longitudinal pendant le processus de soufflage,
**caractérisée en ce que**
la première soupape (1) peut être insérée suite à un déplacement relatif entre cette soupape (1) et l'ébauche (V) dans la zone de l'orifice d'embouchure de l'ébauche de préforme (V) par l'intermédiaire d'un entraînement (21, 31), et pendant le transfert du fluide provenant du premier accumulateur de pression (S), la sortie (77) de la première soupape (1) est située à l'intérieur de l'ébauche (V) ou du corps creux (F) et, pendant le transfert du fluide provenant du premier accumulateur de pression (S), l'ébauche (B) ou le corps creux (F) est rendu étanche par un joint d'étanchéité (22) sur un bord de l'orifice d'embouchure de l'ébauche ou du corps creux ou sur la surface interne de l'ébauche (V) ou du corps creux (F) de sorte que, après être sorti de la première soupape (1) et pendant la durée d'ouverture de la première soupape (1), le fluide soit exclusivement situé dans la zone interne (303) de l'ébauche (V) ou du corps creux (F), la zone interne (303) étant délimitée par le bord de l'orifice d'embouchure de l'ébauche ou du corps creux, et pendant l'étirage longitudinal de l'ébauche (V), la tige d'étirage (7) passant par zones à côté ou au travers d'au moins une soupape (1, 2) située dans la zone interne (303).
